(19) Europäisches Patentamt / European Patent Office / Office européen des brevets

(11) **EP 3 100 367 B1**

(12) **EUROPEAN PATENT SPECIFICATION**

(45) Date of publication and mention
of the grant of the patent:
**31.08.2022 Bulletin 2022/35**

(21) Application number: **15743799.7**

(22) Date of filing: **27.01.2015**

(51) International Patent Classification (IPC):
$H04B\ 7/04$ (2017.01)  $H04J\ 11/00$ (2006.01)
$H04B\ 7/06$ (2006.01)  $H04W\ 72/04$ (2009.01)
$H04L\ 5/00$ (2006.01)  $H04B\ 7/0408$ (2017.01)
$H04B\ 7/0417$ (2017.01)

(52) Cooperative Patent Classification (CPC):
**H04B 7/0408; H04B 7/0417; H04B 7/0617;
H04B 7/0686**

(86) International application number:
**PCT/KR2015/000858**

(87) International publication number:
**WO 2015/115776 (06.08.2015 Gazette 2015/31)**

(54) **MULTISTAGE BEAMFORMING OF MULTIPLE-ANTENNA COMMUNICATION SYSTEM**

MEHRSTUFIGE STRAHLFORMUNG EINES MEHRANTENNEN-KOMMUNIKATIONSSYSTEMS

FORMATION MULTI-ÉTAGE DE FAISCEAUX D'UN SYSTÈME DE COMMUNICATIONS À ANTENNES MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2014 US 201461932663 P
28.10.2014 US 201414526284**

(43) Date of publication of application:
**07.12.2016 Bulletin 2016/49**

(73) Proprietor: **Samsung Electronics Co., Ltd.
Suwon-si, Gyeonggi-do 443-742 (KR)**

(72) Inventors:
• **XU, Gang
Collin County, Texas 75013 (US)**
• **NAM, Young-Han
Colin County, Texas 75025 (US)**

• **LI, Yang
Collin County, Texas 75025 (US)**
• **XIN, Yan
Mercer County, New Jersey 08540 (US)**
• **ZHANG, Jianzhong
Collin County, Texas 75093 (US)**

(74) Representative: **Gulde & Partner
Patent- und Rechtsanwaltskanzlei mbB
Wallstraße 58/59
10179 Berlin (DE)**

(56) References cited:
EP-A1- 2 088 726       WO-A1-2013/089525
US-A1- 2009 290 657    US-A1- 2009 290 657
US-A1- 2012 008 587    US-A1- 2013 022 143
US-A1- 2013 072 247    US-A1- 2013 286 960
US-A1- 2013 301 454    US-A1- 2013 328 722

**Description**

TECHNICAL FIELD

The present application relates generally to wireless communication networks and, more specifically, to a multistage beamforming in a multiple-antenna communication system.

BACKGROUND

The rapid growth of data traffic driven by mobile devices poses challenges on capacity of cellular networks. Multiple-input-multiple-output (MIMO) and multiuser MIMO (MU-MIMO) are technologies introduced in the 3GPP LTE and LTE-advanced standards to improve spectral efficiency. MIMO systems include an enhanced NodeB (eNB) equipped with a linear array with antenna elements placed in a horizontal line, and the eNB exploits spatial diversity in the azimuth (horizontal) domain. An increase in system capacity can be gained by deploying antennas vertically.

US 2013/0301454 A1 discloses a communication method using analog and digital hybrid beamforming, including the steps of: receiving a first message including a measurement and selection condition for hybrid beamforming from a Base Station (BS); measuring channels of a plurality of BS transmission beams; selecting at least one BS transmission beam based on channel measurements; transmitting report information about the selected at least one BS transmission beam to the BS; receiving from the BS a second message; estimating an effective channel matrix for the selected final BS transmission beam according to the measurement and report condition; determining feedback information for digital beamforming of the BS based on the effective channel matrix; transmitting the determined feedback information to the BS; and receiving a data burst from the BS according to a Multiple Input Multiple Output (MIMO) mode and/or a configuration scheduled based on the feedback information.

US 2012/0008587 A1 discloses a method for transmitting a signal in a wireless communication system, including the steps of: generating R spatial streams each of which is generated on the basis of an information stream and a reference signal; generating N transmit streams on the basis of the R spatial streams and a precoding matrix (where R<N); mapping the N transmit streams to at least one resource block; generating N signals from the N transmit streams mapped to the at least one resource block; and transmitting the N signals to a user equipment through respective antennas.

WO 2013/089525 A1 discloses a method for transmitting a signal needed for beam acquisition in a wireless communication system operating in a super-high frequency band, in which a small reference modulation symbol length relative to a data modulation symbol length is determined, taking into account a communication characteristic of a Mobile Station (MS), wherein a data modulation symbol generated by modulating a data signal using a predetermined modulation scheme is transmitted according to the determined data modulation symbol length, and a reference modulation symbol generated by modulating a reference signal using the predetermined modulation scheme is transmitted according to the determined reference modulation symbol length.

US 2013/0022143 A1 discloses a symbol-wise beamforming method in an OFDM communication system using multiple antennas, wherein a weight vector calculator calculates a transmit weight vector using a signal received through the multiple antennas as an input on the basis of channel information in the time domain and covariance matrix information about interference and noise and computes a receive weight vector using the calculated transmit weight vector. Therein, at least one of the calculated transmit weight vector and receive weight vector is transmitted to a transmission apparatus through a transmitter.

US 2009/0290657 A1 discloses a transmitting entity which performs spatial processing on data symbols for each subband with an eigenmode matrix, a steering matrix, or an identity matrix to obtain spatially processed symbols for the subband. Therein, the data symbols may be sent on orthogonal spatial channels with the eigenmode matrix, on different spatial channels with the steering matrix, or from different transmit antennas with the identity matrix. The transmitting entity further performs beamforming on the spatially processed symbols, in the frequency domain or time domain, prior to transmission from the multiple transmit antennas.

SUMMARY

In an embodiment, a method for operating a transmitter in a wireless communication network is provided as defined in the appended claims.

In an unclaimed example, a multistage beamforming circuit includes a data unit that implements a frequency selective beamforming stage and a remote radio head that implements a time-domain broadband beamforming stage. The data unit implements the frequency selective beamforming stage by converting K received data streams into M precoding output streams in a frequency-domain. The data unit is configured to transform the M output streams to M OFDM time-domain signals. The remote radio head is configured to implement a time-domain broadband beamforming stage by converting the M OFDM time-domain signals into N transmit streams of time-domain samples. The remote radio head includes a transmit antenna array configured to transmit the N transmit streams that together form broadcast beams and multiple of user-specific narrow beams. The antenna array includes a plurality of physical antennas. The number N of transmitter streams is greater than the number M of precoding output streams.

In another unclaimed example, a base station for multistage beamforming in a wireless communication network includes a data unit configured to implement a frequency selective beamforming stage. The data unit includes a frequency domain precoding module configured to receive and precode the K data streams into M precoding output streams in a frequency domain by applying frequency domain precoding matrices. The data unit includes M pairs of an Inverse Fast Fourier Transform (IFFT) processing block coupled to M cyclic prefix processing block, and each pair is configured to transform the M output streams into M OFDM time-domain signals. Each IFFT processing block is configured to transform a received frequency-domain signal to a stream of time domain samples. Each cyclic prefix processing block is configured to add a cyclical prefix to the stream of time domain samples to generate the M precoding output stream. The base station includes a remote radio head configured to implement a time-domain broadband beamforming stage by converting the M OFDM time-domain signals into N transmit streams of time-domain samples. The remote radio head signals includes a time-domain broadband beamforming module configured to receive and precode the M output streams into N precoded output signals using a wide-band precoding matrix. The remote radio head signals includes a transmit antenna array configured to transmit the N transmit streams that together form broadcast beams and user-specific narrow beams. The antenna array includes a plurality of physical antennas. The number N of transmitter streams is greater than the number M of independent precoding output streams in the time domain.

In yet another unclaimed example, a multistage beamforming method includes implementing a frequency domain beamforming stage by converting K data streams in a frequency-domain into M precoding output streams in a frequency domain. The method includes transforming the M output streams to M OFDM time-domain signals. The method includes implementing a time-domain broadband beamforming stage by: converting the M OFDM time-domain signals into N transmit streams of time-domain samples; and transmitting, by a transmit antenna array including a plurality of physical antenna, the N transmit streams that together form broadcast beams and user-specific narrow beams. The number N of transmitter streams is greater than the number M of precoding output streams.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

BRIEF DESCRIPTION OF THE DRAWINGS

For a more complete understanding of this disclosure and its advantages, reference is now made to the following description, taken in conjunction with the accompanying drawings, in which:

FIGURE 1 illustrates an unclaimed example wireless network according to the present disclosure;
FIGURES 2A and 2B illustrate unclaimed example wireless transmit and receive paths according to the present disclosure;
FIGURE 3 illustrates an unclaimed example user equipment according to the present disclosure; and
FIGURE 4 illustrates a full-dimension multiple-input-multiple-output (FD-MIMO) communication system according to unclaimed aspects of the present disclosure;
FIGURE 5 illustrates a 3GPP LTE physical layer processing architecture according to the present disclosure;
FIGURES 6 and 7 illustrate unclaimed examples of architecture of a FD-MIMO base station according to the present disclosure;

FIGURES 8A, 8B, 9, and 10 illustrate examples of a multistage beamforming architecture for a multiple antenna wireless communication system according to embodiments of the present disclosure;

FIGURE 11 illustrates a channel-state-information reference signal (CSI-RS) mapping scheme in a multistage beamforming system according to unclaimed aspects of the present disclosure;

FIGURE 12 illustrates a control signal virtualization and multiplexing method according to unclaimed aspects of the present disclosure; and

FIGURE 13 illustrates an operation procedure of a transmitter according to unclaimed aspects of the present disclosure.

DETAILED DESCRIPTION

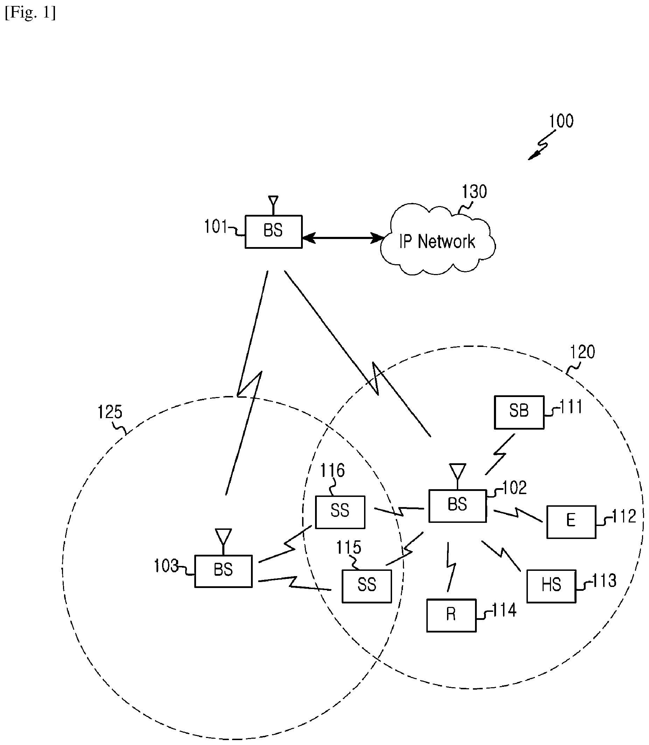

FIGURES 1 through 13, discussed below, and the various aspects used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

The following documents and standards descriptions are relevant for the present disclosure: (i) L. Vuokko, V.-M. Kolmonen, J. Kivinen, and P. Vainikainen, "Results from 5.3 GHz MIMO measurement campaign," presented at COST 273 TD(04)193, Duisburg, 2004 (hereinafter "REF1"); (ii) Alcatel Lucent, Lightradio, at http://www.alcatel-lucent.com/lightradio/ (hereinafter "REF2"); (iii) Young-Han Nam, Boon Loong Ng, Krishna Sayana, Yang Li, Jianzhong (Charlie) Zhang, Younsun Kim and Juho Lee ,"Full Dimension MIMO (FD-MIMO) for Next Generation Cellular Technology", Communications Magazine, IEEE , vol.51, no.6, pp.172,179, June 2013  (hereinafter "REF3"); T. L. Marzetta, "Non-cooperative cellular wireless with unlimited numbers of base station antennas", IEEE Trans. Wireless Communications, vol. 9, Issue 11, pp. 3590 - 3600, November 2010 (hereinafter "REF4"); U.S. Patent Application Publication No. 2013/0301454 A1 entitled "Communication method and apparatus using analog and digital hybrid beamforming" to Ji-Yun Seol et al. (hereinafter "REF5"); and 3GPP TS 36.211: "Evolved Universal Terrestrial Radio Access (E-UTRA); Physical channels and modulation".

FIGURES 1 through 13, discussed below, and the various aspects used to describe the principles of the present invention in this patent document are by way of illustration only and should not be construed in any way to limit the scope of the disclosure. Those skilled in the art will understand that the principles of this disclosure may be implemented in any suitably arranged device or system.

FIGURE 1 illustrates an example wireless network 100 according to this disclosure. The wireless network 100 shown in FIGURE 1 is for illustration only.

As shown in FIGURE 1, the wireless network 100 includes an eNodeB (eNB) 101, an eNB 102, and an eNB 103. The eNB 101 communicates with the eNB 102 and the eNB 103. The eNB 101 also communicates with at least one Internet Protocol (IP) network 130, such as the Internet, a proprietary IP network, or other data network.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

The eNB 102 provides wireless broadband access to the network 130 for a first plurality of user equipments (UEs) within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M) like a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some aspects, one or more of the eNBs 101-103 may communicate with each other and with the UEs 111-116 using 5G, LTE, LTE-A, WiMAX, or other advanced wireless communication techniques.

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

As described in more detail below, various components of the wireless network 100 (such as the eNBs 101-103) support multistage downlink beamforming architectures.

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNB 101, 102, and/or 103 could provide access to other or additional external networks, such as external telephone networks or other types of data networks.

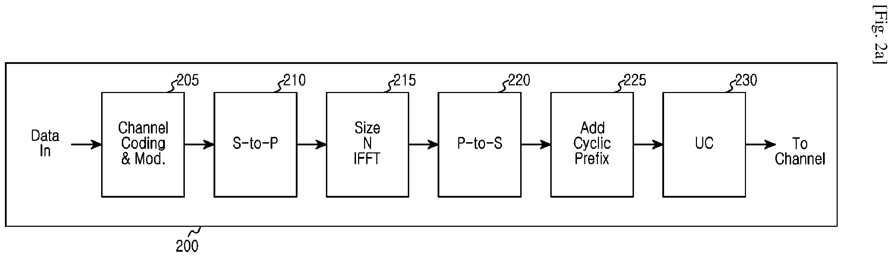

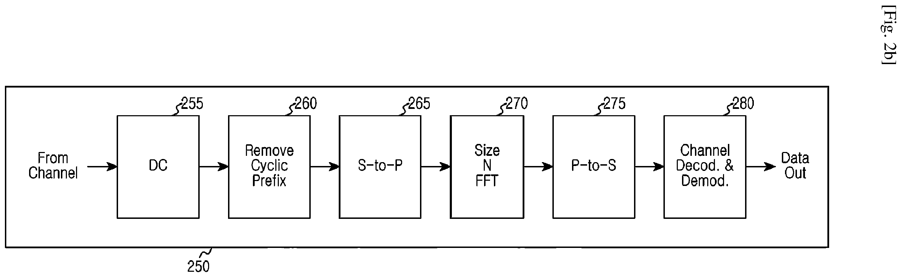

FIGURES 2A and 2B illustrate example wireless transmit and receive paths according to this disclosure. In the following description, a transmit path 200 may be described as being implemented in an eNB (such as eNB 102), while a receive path 250 may be described as being implemented in a UE (such as UE 116). However, it will be understood that the receive path 250 could be implemented in an eNB and that the transmit path 200 could be implemented in a UE. In some aspects, the transmit path 200 and receive path 250 are configured to support multiple-stage downlink beamforming for a multiple-antenna wireless communication system.

The transmit path 200 includes a channel coding and modulation block 205, a serial-to-parallel (S-to-P) block 210, a size N Inverse Fast Fourier Transform (IFFT) block 215, a parallel-to-serial (P-to-S) block 220, an add cyclic prefix block 225, and an up-converter (UC) 230. The receive path 250 includes a down-converter (DC) 255, a remove cyclic prefix block 260, a serial-to-parallel (S-to-P) block 265, a size N Fast Fourier Transform (FFT) block 270, a parallel-to-serial (P-to-S) block 275, and a channel decoding and demodulation block 280.

In the transmit path 200, the channel coding and modulation block 205 receives a set of information bits, applies coding (such as a low-density parity check (LDPC) coding), and modulates the input bits (such as with Quadrature Phase Shift Keying (QPSK) or Quadrature Amplitude Modulation (QAM)) to generate a sequence of frequency-domain modulation symbols. The serial-to-parallel block 210 converts (such as de-multiplexes) the serial modulated symbols to parallel data in order to generate N parallel symbol streams, where N is the IFFT/FFT size used in the eNB 102 and the UE 116. The size N IFFT block 215 performs an IFFT operation on the N parallel symbol streams to generate time-domain output signals. The parallel-to-serial block 220 converts (such as multiplexes) the parallel time-domain output symbols from the size N IFFT block 215 in order to generate a serial time-domain signal. The add cyclic prefix block 225 inserts a cyclic prefix to the time-domain signal. The up-converter 230 modulates (such as up-converts) the output of the add cyclic prefix block 225 to an RF frequency for transmission via a wireless channel. The signal may also be filtered at baseband before conversion to the RF frequency.

A transmitted RF signal from the eNB 102 arrives at the UE 116 after passing through the wireless channel, and reverse operations to those at the eNB 102 are performed at the UE 116. The down-converter 255 down-converts the received signal to a baseband frequency, and the remove cyclic prefix block 260 removes the cyclic prefix to generate a serial time-domain baseband signal. The serial-to-parallel block 265 converts the time-domain baseband signal to parallel time domain signals. The size N FFT block 270 performs an FFT algorithm to generate N parallel frequency-domain signals. The parallel-to-serial block 275 converts the parallel frequency-domain signals to a sequence of modulated data symbols. The channel decoding and demodulation block 280 demodulates and decodes the modulated symbols to recover the original input data stream.

Each of the eNBs 101-103 may implement a transmit path 200 that is analogous to transmitting in the downlink to UEs 111-116 and may implement a receive path 250 that is analogous to receiving in the uplink from UEs 111-116. Similarly, each of UEs 111-116 may implement a transmit path 200 for transmitting in the uplink to eNBs 101-103 and may implement a receive path 250 for receiving in the downlink from eNBs 101-103.

Each of the components in FIGURES 2A and 2B can be implemented using only hardware or using a combination of hardware and software/firmware. As a particular example, at least some of the components in FIGURES 2A and 2B may be implemented in software, while other components may be implemented by configurable hardware or a mixture of software and configurable hardware. For instance, the FFT block 270 and the IFFT block 215 may be implemented as configurable software algorithms, where the value of size N may be modified according to the implementation.

Furthermore, although described as using FFT and IFFT, this is by way of illustration only and should not be construed to limit the scope of this disclosure. Other types of transforms, such as Discrete Fourier Transform (DFT) and Inverse Discrete Fourier Transform (IDFT) functions, could be used. It will be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURES 2A and 2B illustrate examples of wireless transmit and receive paths, various changes may be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Any other suitable architectures could be used to support wireless communications in a wireless network.

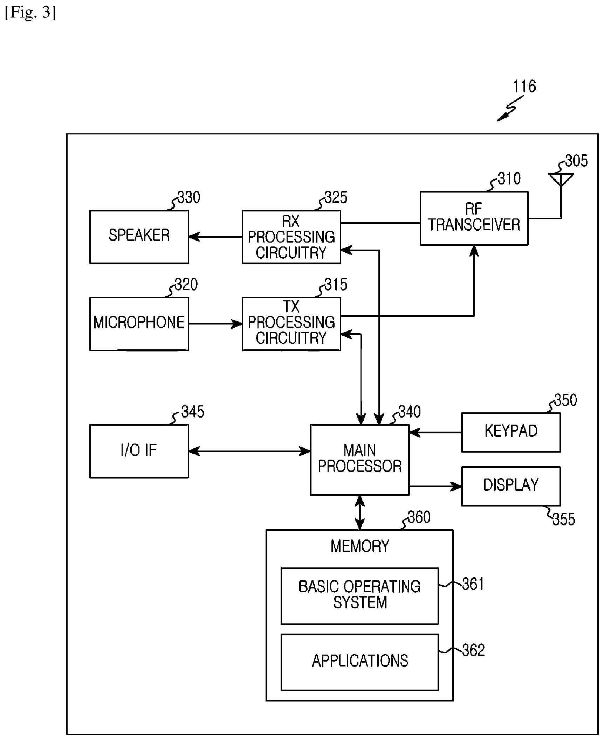

FIGURE 3 illustrates an example UE 116 according to this disclosure. The UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a radio frequency (RF) transceiver 310, transmit (TX) processing circuitry 315, a microphone 320, and receive (RX) processing circuitry 325. The UE 116 also includes a speaker 330, a main processor 340, an input/output (I/O) interface (IF) 345, a keypad 350, a display 355, and a memory 360. The memory 360 includes a basic operating system (OS) program 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the main processor 340 for further processing (such as for web browsing data).

The TX processing circuitry 315 receives analog or digital voice data from the microphone 320 or other outgoing baseband data (such as web data, e-mail, or interactive video game data) from the main processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The main processor 340 can include one or more processors or other processing devices and execute the basic OS program 361 stored in the memory 360 in order to control the overall operation of the UE 116. For example, the main processor 340 could control the reception of forward channel signals and the transmission of reverse channel signals by the RF transceiver 310, the RX processing circuitry 325, and the TX processing circuitry 315 in accordance with well-known principles. In some aspects, the main processor 340 includes at least one microprocessor or microcontroller.

The main processor 340 is also capable of executing other processes and programs resident in the memory 360, such as operations for multiple-stage downlink beamforming for a multiple-antenna wireless communication system. The main processor 340 can move data into or out of the memory 360 as required by an executing process. In some aspects, the main processor 340 is configured to execute the applications 362 based on the OS program 361 or in response to signals received from eNBs or an operator. The main processor 340 is also coupled to the I/O interface 345, which provides the UE 116 with the ability to connect to other devices such as laptop computers and handheld computers. The I/O interface 345 is the communication path between these accessories and the main controller 340.

The main processor 340 is also coupled to the keypad 350 and the display unit 355. The operator of the UE 116 can use the keypad 350 to enter data into the UE 116. The display 355 may be a liquid crystal display or other display capable of rendering text and/or at least limited graphics, such as from web sites.

The memory 360 is coupled to the main processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

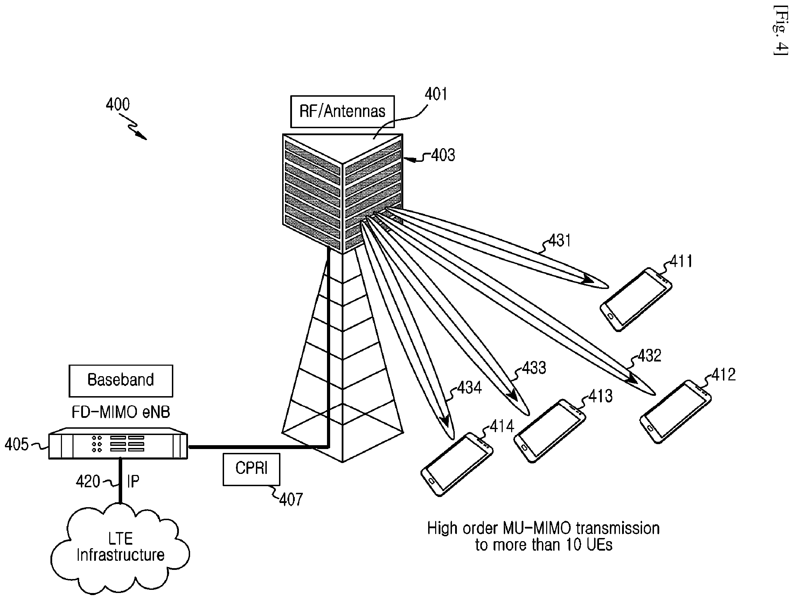

FIGURE 4 illustrates a full-dimension multiple-input-multiple-output (FD-MIMO) communication system according to unclaimed aspects of the present disclosure. The FD-MIMO communication system 400 shown in FIGURE 4 is for illustration only.

The FD-MIMO communication system 400 includes an eNB 401 and multiple UEs 411-414. The eNB 401 includes one or multiple antenna arrays 403, a baseband unit 405 (BBU), and a common public radio interface (CPRI) 407 that couples the BBU 405 to the antenna arrays 403. The BBU 405 couples the eNB 401 to the LTE infrastructure through an internet protocol (IP) backhaul 420.

According to REF1 and REF2, deploying antennas vertically allows eNBs to utilize diversity in the elevation domain (for example by elevation beamforming), achieving up to 30% gain in system capacity (for example, throughput).

According to REF3, full-dimension MIMO (FD-MIMO) has emerged as a technology to significantly increase system capacity. In FD-MIMO (also referred to as Massive MIMO in REF4), an eNB 401 deploys a large number of active antenna elements in a two-dimension (2D) plane (namely, a 2D active antenna array) as illustrated in FIGURE 4. The eNB 401 can form beams in both horizontal and vertical domain, fully exploiting the spatial diversity, and therefore is capable of supporting high-order MU-MIMO. That is, in FD-MIMO, the 2D active antenna array has many active antenna elements, and therefore, it is non-trivial to design an antenna virtualization precoder $w_0$ to maintain a wide-beam pattern.

In one example, the eNB 401 includes three antenna arrays. Each antenna array 403 generates high order MU-MIMO transmission to more than ten (10) UEs. Each antenna array includes a number ($N_V$) arranged vertically as a column and a number ($N_H$) of antennas arranged horizontally as a row. For example, each antenna array 403 includes sixty-four (64) antennas arranged as eight antennas per row and eight antennas per column. The sixty-four antennas form the transmit beam 431 corresponding to the UE 411. For each other UE 412-414, the sixty-four antennas form a corresponding transmit beam 432-434.

In LTE or LTE-A, the UEs 411-414 coupled to the eNB receive control information. To ensure the wide coverage, the eNB 401 uses a special precoder, called antenna virtualization, to control symbols so that the transmission of the control symbols from the eNB 401 has a wide beam width. In certain aspects, the antenna virtualization precoder can be expressed as $w_0 = [w_1, \cdots, w_{Nt}]$, in which case, the eNB 401 transmits a control symbol $s_0^j$ as $x_0^j = w_0 s_0^j$.

Channel quality indictor (CQI) prediction is a challenge associated with antenna virtualization. The CQI is a feedback parameter from UEs that informs the eNB of the overall signal-to-noise ratio (SNR) at the UEs. The CQI impacts transmission schemes, modulation and coding methods, and the like that are selected by the eNB. In LTE/LTE-A, a UE usually derives CQI based on symbols transmitted by antenna virtualization. Data symbols are usually precoded by beams with narrow width to reduce interference to unintended UEs. As a result, CQI may not match the SNR of the data channel due to the precoding difference. That is, the precoding of a data channel is different from the precoding of a control channel, consequently, the antennavirtualization-based-CQI may not match the SNR or the data channel. In FD-MIMO systems, a mismatch between the CQI and SNR can be significant, because the precoding for data symbols has a much narrower beamwidth due to the large number of antennas in the array. As a solution, the eNB 401 performs CQI prediction by estimating the SNR for data channels based on the feedback CQI (or CQI fed back from a UE).

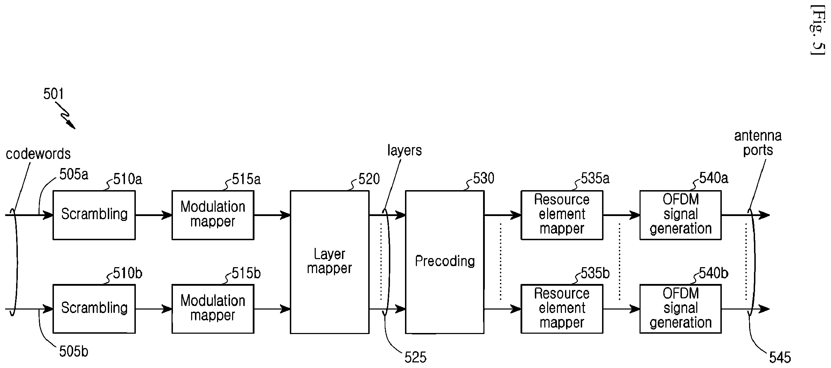

FIGURE 5 illustrates a 3GPP LTE physical layer processing architecture according to the present disclosure. REF 6 specifies the physical layer processing architecture in FIGURE 5. The 3GPP LTE physical layer processing architecture 501 receives multiple codewords 505a-b and outputs an OFDM signal for each received codeword. The input of the processing chain in FIGURE 5 is up to two codewords, wherein each codeword includes a sequence of bits. The bits in each codeword are scrambled and modulated by processing through "scrambling" and "modulation mapper" blocks. The scrambling unit 510a scrambles the codeword 505a and outputs a scrambled codeword. The modulation mapper 515a receives the scrambled codeword output from the scrambling unit 510a and modulates the scrambled codeword. The scrambling unit 510b and the modulation mapper 515b perform the same functions on the codeword 505b as elements 510a and 515a perform on codeword 505a. The layer mapper 520 receives the modulated scrambled codeword from the modulation mappers 515a and 515b and generates multiple layers 525. More particularly, the modulation symbols of the two codewords process through a layer mapper generating a number of layers ($K$). Each layer of the $K$ number of layers is output to the precoding unit 530 that generates a number of precoded signals ($N$). Each of the $N$ precoded signals corresponds to a respective resource element mapper 535a,b and a respective OFDM signal generation unit 540a,b. The K number of precoded signals are fed into their respective resource element mapper and OFDM signal generation blocks to output a number of antenna port signals ($N$). More particularly, each resource element mapper 535a,b receives and maps the precoded layer to resource elements of a resource block. Each OFDM signal generation unit 540a and 540b outputs an OFDM signal to the antenna ports 545.

In 3GPP LTE downlink, there are three different types of antenna ports, including cell-specific reference signal (CRS) antenna ports, channel-state-information reference signal (CSI-RS) antenna ports, and UE-specific reference signal (UE-RS) antenna ports. For CRS antenna ports, $N = 1, 2$ or $4$. For CSI-RS antenna ports, $N = 1, 2, 4$ or $8$. For UE-RS antenna ports, $N = 1, 2, 3, \ldots, 8$.

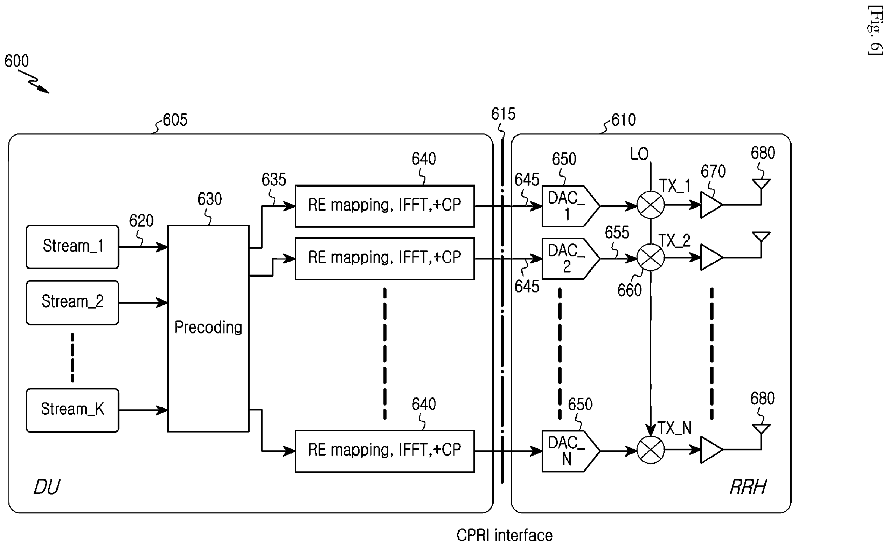

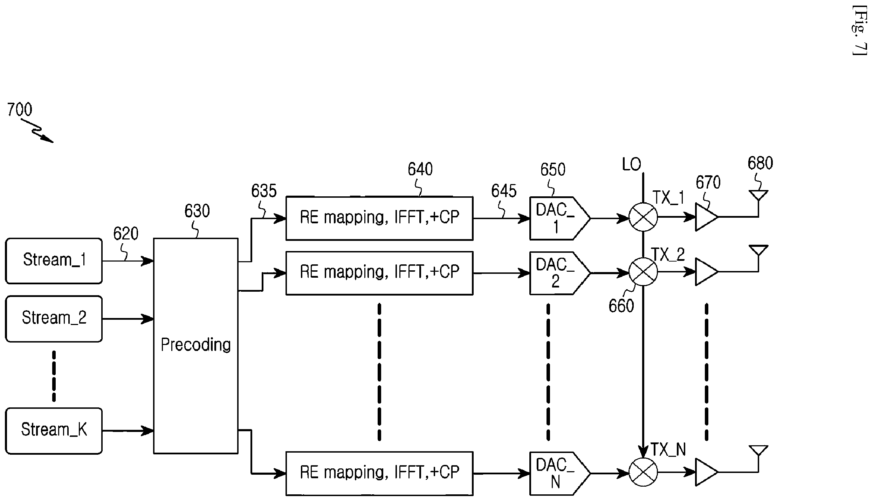

FIGURES 6 and 7 illustrate examples of architecture of a FD-MIMO base station according to the present disclosure. FIGURE 6 illustrates architecture of a FD-MIMO base station using a CPRI interface. FIGURE 7 illustrates architecture of another FD-MIMO base station, which is an integrated base station in which the modem and RF unit are integrated. The FD-MIMO base station architecture 600 and 700 shown in FIGURES 6 and 7 are for illustration only.

To support a large number of antenna ports, the overall system complexity increases. The complexity of precoding of multiple streams, OFDM modulation and interface between baseband and RF unit, increases proportionally to the number of antennas in the system. The complexity makes the system cost prohibitive to support large number of antenna ports.

In the example shown in FIGURE 6, the FD-MIMO base station architecture 600 includes a data unit (DU) 605 and a remote radio head (RRH) 610 coupled to each other by a CPRI interface 615. In certain aspects, the DU 605 is located at the bottom of the tower, the RRH 610 is located at the top of the tower, and the CPRI 615 runs from the top to the bottom of the tower to connect the DU 605 to the RRH 610. In certain aspects, the DU 605 is located several kilometers away from the RRH 610, and the CPRI 615 runs from the RRH 610 at the top of the tower to connect to the DU 605. The DU 605 processes K streams (or layers) of baseband signals 620. The baseband signals 620 can be from multiple users or from multiple layers in MIMO configuration. The DU 605 includes a precoding block 630 and N IFFT blocks 640. The precoding block 630 performs frequency domain beamforming in the frequency domain to combat multipath fading for $K$ streams by using $N$ antenna ports. Examples of frequency domain beamforming include frequency selective beamforming, frequency dependent beamforming, and narrow band precoding. In various aspects, the frequency precoding can vary across frequencies (frequency selective) or remain the same for the entire assigned bandwidth (frequency flat or wideband). More particularly, the precoding block 630 receives $K$ baseband signals from $K$ streams and outputs $N$ frequency domain signals 635. The IFFT blocks 640 convert frequency domain signals 635 to time domain signals 645 by performing IFFT operations. Each IFFT block 640 performs resource element mapping, performing the IFFT operation, and adds a cyclical prefix (CP) to the time domain signal 645 outputted from the DU 605. The IFFT block 640 may be referred as an 'OFDM modulation unit'. The CPRI interface 615 carries the time domain signals 645 with CP to the RRH 610 for downlink transmission. The CPRI interface 615 includes a high speed fiber interface that carries baseband signals.

The RRH 610 processes N time domain signals 645 for N discrete transmission paths. More particularly, the RRH 610 outputs N beams. The RRU 610 includes $N$ digital-to-analog converters (DAC) 650, $N$ radio frequency (RF) chains 660, and $N$ power amplifiers 670 and $N$ antennas 680. The DAC 650 converts a digital time domain signal 645 into an analog RF signal 655. The each RF chain 660 outputs a signal to a corresponding power amplifier 670 and antenna port for the corresponding antenna 680.

The architecture 700 of a FD-MIMO base station is similar to the architecture 600 of a FD-MIMO base station. The architecture 700 of the FD-MIMO base station does not include a CPRI interface 615. For example, the IFFT blocks 640 output the time domain signals 645 directly into the DAC 650. In certain aspects, the components of the architecture 700 of the FD-MIMO base station are disposed in close proximity to each other and are not separated by a tower height.

In FIGURES 6 and 7, the complexity of each system architecture 600 and 700 is measured according to Equations 1-3, where $N$ is the number of antenna ports, $K$ is the number of steams, L is the number of data resource elements, and G is the number of guard resource elements. In Equation 1, precoding includes matrix multiplication of $(N \times K)$ and $(K \times L)$. Equation 2 relates to the IFFT. Equation 3 relates to data traffic through the CPRI interface or other digital interface. The complexity of precoding, IFFT, and data traffic going through CPRI interface is proportional to the number of antenna ports $N$. When $N$ is large, the system is cost prohibitive.

$$\text{Complexity} = O(N \times K \times L) \qquad (1)$$

$$\text{Complexity} = O\big((L + G) \times log_2(L + G) \times N\big) \qquad (2)$$

$$\text{Complexity} = N \times (L + G) \text{ samples per OFDM symbol} \qquad (3)$$

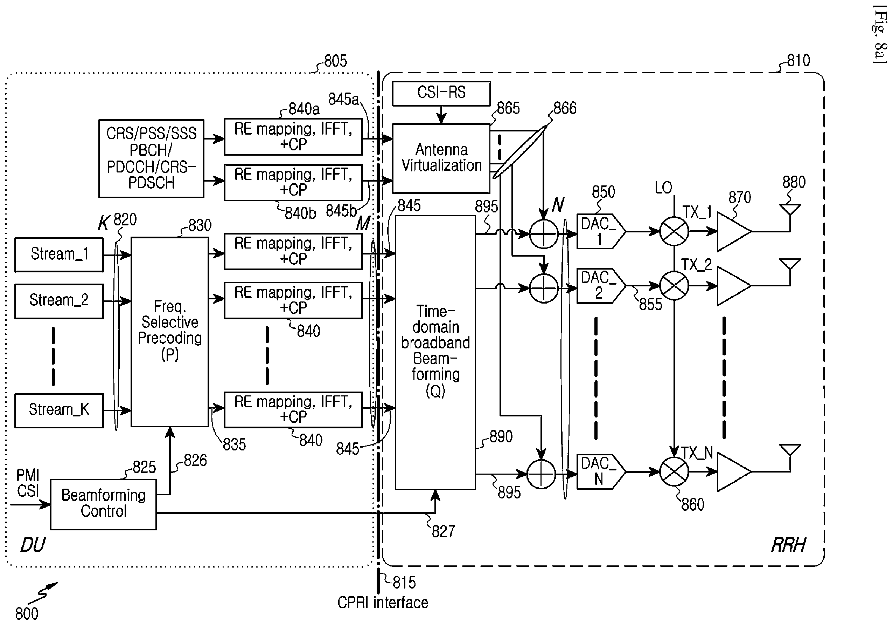

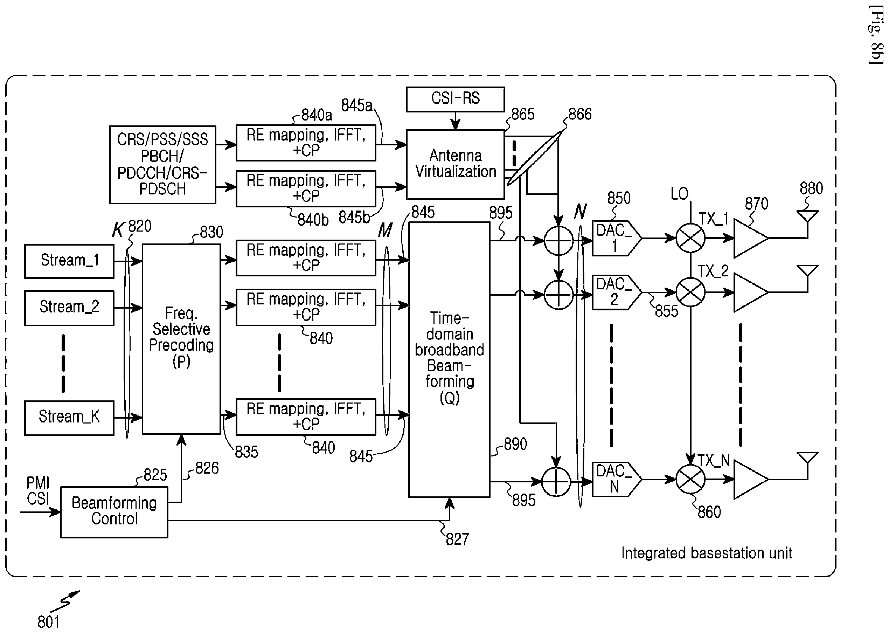

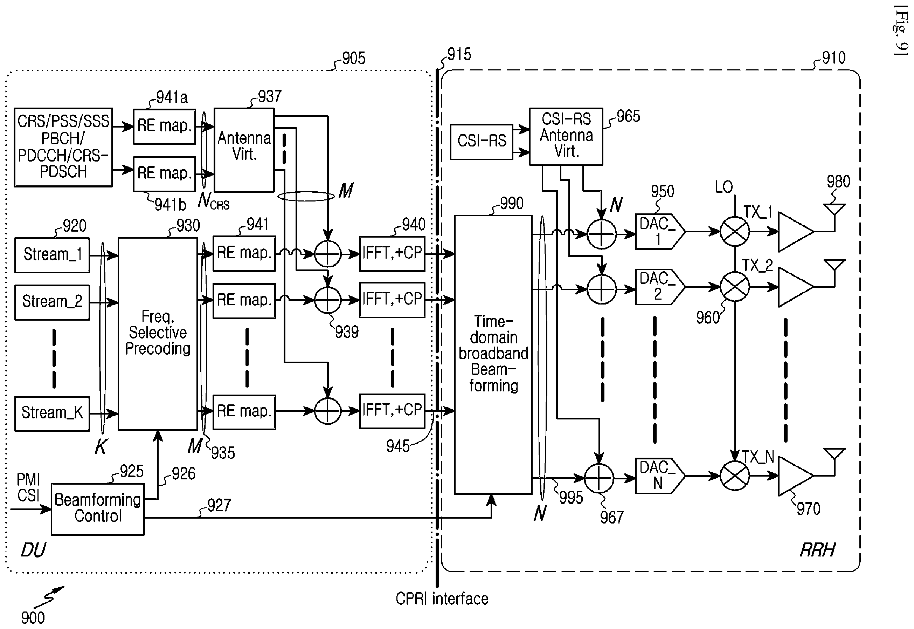

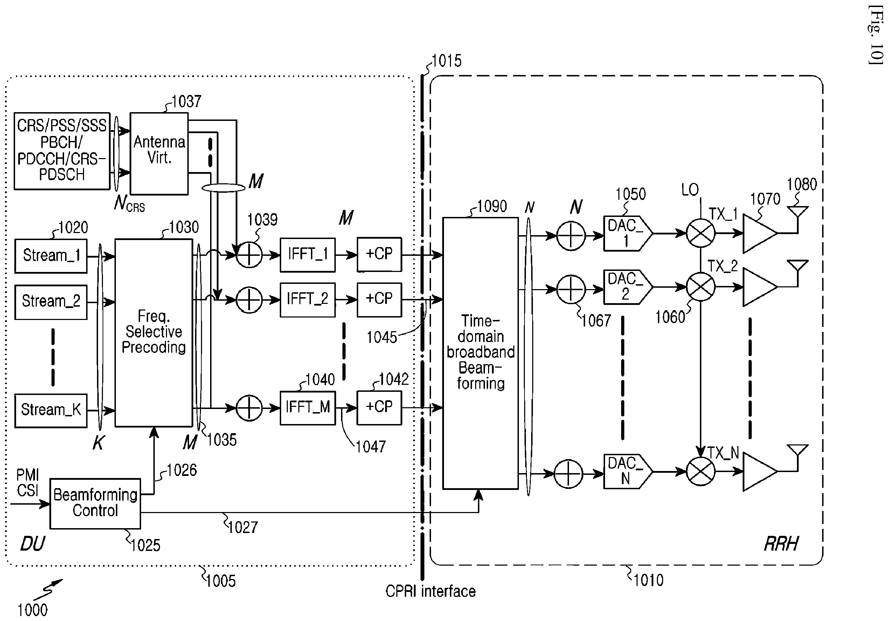

FIGURES 8A, 8B, 9, and 10 illustrate examples of a multistage beamforming architecture for a multiple antenna wireless communication system according to embodiments of the present disclosure. Each of the multistage beamforming architectures in FIGURES 8A-10 includes a frequency-domain stage that simultaneously forms M independent precoding output streams by converting K received data streams (layers) from the frequency domain to the time-domain, where K is less than or equal to M. Also, each of the multistage beamforming architectures in FIGURES 8A-10 includes a time-domain stage that simultaneously transmits signals from N transmitter RF chains by converting M received independent precoding output streams, where N is greater than M. FIGURE 8A illustrates an example of a multistage beamforming for a multiple-antenna wireless communication system including antenna virtualization for common control signals and CSI-RS in the time-domain stage. FIGURE 8B illustrates an integrated base station unit including an example of a multistage beamforming for a multiple-antenna wireless communication system including antenna virtualization for common control signals and CSI-RS in the time-domain stage. FIGURE 9 illustrates another example of a multistage beamforming for a multiple-antenna wireless communication system including antenna virtualization for common control signals in the frequency domain stage and antenna virtualization for CSI-RS in the time-domain stage. FIGURE 10 illustrates an example of a multistage beamforming for a multiple-antenna wireless communication system including antenna virtualization for common control signals and CSI-RS in the frequency-domain stage. The multistage beamforming architecture for a multiple antenna wireless communication system includes at least two stages of beamforming. The embodiments of the architectures 800, 801, 900, and 1000 shown in FIGURES 8A, 8B, 9, and 10 are for illustration only. Other embodiments could be used without departing from the scope of the present disclosure.

For example, each of the multistage beamforming architectures in FIGURES 8A-10 can be implemented in a macro base station including a CPRI interface that connects the frequency-domain stage to the time-domain stage. As another example, each of the multistage beamforming architectures in FIGURES 8A-10 can be implemented in an integrated base station, where data unit and antenna unit are combined in one unit, including the frequency-domain stage integrated with the time-domain stage to form a single system that does not include a CPRI interface. The multistage beamforming architectures in FIGURES 8A-10 can be implemented in an FD-MIMO base station.

FIGURE 8A shows a two-stage beamforming (precoding) for a cellular downlink system. In the multistage beamforming architecture 800, CRS, CSI-RS and corresponding channels of PBCH, PDCCH, PSS/SSS, and CRS-based PDSCH are multiplexed in the time domain after virtualization. In FIGURE 8A, the multistage beamforming architecture 800 includes a data unit (DU) 805 and a remote radio head (RRH) 810 coupled to each other by a CPRI interface 815. In certain embodiments, the DU 805 is located at the bottom of the tower, the RRH 810 is located at the top of the tower, and the CPRI 815 runs from the top to the bottom of the tower to connect the DU 805 to the RRH 810. In certain embodiments, the DU 805 is located several kilometers away from the RRH 810, and the CPRI 815 runs from the RRH 810 at the top of the tower to connect to the DU 805. The DU 805 performs a stage of the beamforming and the RRH 810 performs another stage of the beamforming.

For example, the DU 805 implements the first stage is a frequency selective beamforming stage, in which K data streams (layers) are precoded by frequency-selective precoding matrices. Also in the first stage, frequency domain samples are converted to the time domain. The second stage is a time-domain broadband beamforming stage, in which a second stage beamforming module (namely, the RRH 810) processes M time domain signals. In the second stage, an antenna virtualization module 865 maps common signals (for example, Cell-specific Reference Signals (CRS), CSI-RS, Physical Downlink Control Channel (PDCCH), Physical Broadcast Channel (PBCH), and PSS/SSS) and CRS-PDSCH into a beam pattern (for example, a broad beam pattern, or a narrow beam pattern) so that the common signals can be used to cover the cell. These common signals and CRS-PDSCH are added into the N beamformed time domain data signals.

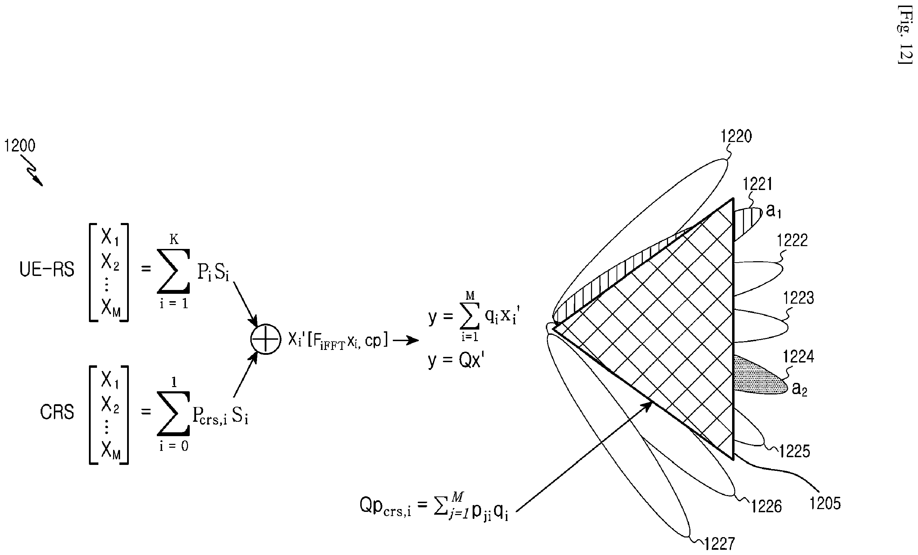

The DU 805 includes a beamforming control block 825, a precoding block 830, a number M of IFFT blocks 840, a common signals IFFT blocks 840a and 840b. The beamforming control block 825 generates beamforming control signals 826-827 based on uplink precoding matrix indicator (PMI) and/or a channel-state-information reference signal (CSI-RS) received from a UE or multiple UEs. The beamforming control block 825 sends the control signal 826 to the precoding block 830 and sends the other control signal 827 to the RRH 810. The beamforming control signal 826 indicates to the frequency domain precoding block 830 the frequency-selective precoding matrices to be applied to the K data streams 820. The beamforming control signal 827 indicates to the time-domain broadband beamforming block 890 the wide-band precoding matrix Q, or a set of indicators can be used to reconstruct Q, to be applied to the M streams 845 inputted to the time-domain broadband beamforming block 890. More particularly, the CPRI 815 carries the beamforming control signal 827 from the DU 805 to the RRH 810. The wide-band precoding matrix Q is described more particularly below in reference to FIGURE 12.

The frequency selective precoding block 830 receives K streams (layers) 820 of user data, either from K unique users or any combination of multiple layers for multiple users. Each stream includes at least one user-equipment reference signal (UE-RS) combined with the user data. For example, a stream (Stream_1) can include a UE-RS from a first UE 411 combined with a data signal from the first UE 411. The data signal from the first UE 411 is associated with the UE-RS. The frequency domain precoding block 830 transforms the $K$ data streams 820 into $M$ independent precoding output streams 832 by applying frequency selective precoding matrices such as {$P_f$, $f$=0, 1, ..., F}, where subscript f refers to a subband index where the system bandwidth is partitioned into F subbands.

The M IFFT blocks 840 map the M streams 832 to resource elements in the frequency domain. More particularly, an IFFT block 840 is configured to map a respective one of the M precoding output streams to multiple user equipments according to a resource element mapping and transforms the M streams 820 into time domain signals through M inverse discrete Fourier transformations (IFFT). The IFFT block 840 adds a cyclical prefix (CP) to a respective precoded stream as a guard interval. More particularly the IFFT block 840 receives M independent precoded frequency-domain signals 835 and outputs M streams 845 of time domain samples to the RRH 810 through the CPRI interface 815. The M streams 845 of time domain samples are also referred to as OFDM time-domain signals. The interface between data unit and the remote radio head carries M streams of time domain signals.

The common signals IFFT blocks 840a and 840b receives common signals such as CRS, PSS/SSS, PBCH, PDCCH, and CRS-PDSCH. Similar to the IFFT block 840, the common signals IFFT block 840a maps the common signals to resource elements, converts the received common signals to streams 845a-b of time-domain signals by performing IFFT operations. That is, the common signals (CRS, PSS/SSS, PBCH, PDCCH) and CRS-PDSCH are mapped to resource elements and converted to $N_{CRS}$ (shown in FIGURE 8A as $N_{CRS}$=2) streams 845a-b of time domain signals. The $N_{CRS}$ streams 845a-b are carried separately through the CPRI interface and then virtualized using broad beam phase shifters. In certain embodiments, the IFFT blocks 840a and 840b are identical to the IFFT blocks 840. The IFFT block 840, 840a and 840b may be referred as an 'OFDM modulation unit'.

The RRH 810 includes $N$ digital-to-analog converters (DAC) 850, $N$ radio frequency (RF) chains 860, an antenna virtualization module 865, and N power amplifiers 870, multiple antennas 880, and a time-domain broadband beamforming block 890. That is, the RRH 810 includes N transmit streams, and each transmit stream includes one DAC 850, one RF chain 860, and one power amplifier 870. Each transmit stream (also referred to as "transmitter chain" or "transmitter RF chain") is connected to at least one physical antenna. As a result, the number of physical antennas 880 in the RRH 810 can be equal to the number N of transmit streams. A single transmit stream can be connected to multiple physical antennas, and in this embodiment, the number of physical antennas 880 in the RRH 810 can be greater than the number N of transmit streams. The DAC 850 converts a digital time domain signal 845 into an analog RF signal 855. The each RF chain 860 outputs a signal to a corresponding power amplifier 870 and corresponding physical antenna 880. Each of the physical antennas 880 simultaneously transmits signals, which in the air, together, form a broadcast wide beam of control channel information and a plurality of user-specific downlink narrow beams of data information. The right hand side of FIGURE 12 shows theses simultaneously transmitted multiple user-specific data narrow-width beams together with a control broadcast wide beam.

As input, the time-domain broadband beamforming block 890 receives the time domain samples 845 from the CPRI 815 and the beamforming control signal 827 from the beamforming control block 825. The time-domain broadband beamforming block 890 uses digital phase shifters (for example, multipliers or multiplier-less CORDIC functions) to form $N$ streams of time-domain samples 845, where $N$ is the number of independent RF chains. The time-domain broadband beamforming block 890 multiplies a wide-band precoding matrix Q by $M$ input signals 845 and generates $N$ precoded output signals 895. The time-domain broadband beamforming block 890 determines the wideband precoding matrix Q based on the beamforming control signal 827. In certain embodiments, the time-domain broadband beamforming block 890 stores multiple wideband precoding matrices Q, each stored wide-band precoding matrix Q corresponding to an index. In response to receiving a beamforming control signal 827 indicating an index, the time-domain broadband beamforming block 890 selects to precode using the wide-band precoding matrix Q corresponding to the received index. In certain embodiments, the time-domain broadband beamforming block 890 is configured to receive a beamforming control signal 827 that includes a selected wide-band precoding matrix Q, and to precode using the received wide-band precoding matrix Q. In certain embodiments, in response to receiving a beamforming control signal 827 that includes a set of indicators for reconstructing a wide-band precoding matrix Q, the time-domain broadband beamforming block 890 reconstructs the wide-band precoding matrix Q using the set of indicators, and precodes using the reconstructed wide-band precoding matrix Q.

A base station can determine the frequency-domain precoding matrices $\{P_f; f=0, 1, ..., F\}$ and the wide-band precoding matrix Q based upon a precoding matrix indicator (PMI) feedback, or uplink sounding. For example, the beamforming control block 825 sets up the precoding matrices, $\{P_f; f=0, 1, ..., F\}$ and Q. According to the claimed invention, the base station selects to apply MU-MIMO precoding of $\{W_f; f=0, 1, ..., F\}$, the base station determines $\{P_f; f=0, 1, ..., F\}$ and Q that satisfying the condition of : $W_f = QP_f$ for each subband f. More particularly, the frequency selective precoding block 830 determines the precoding matrices $\{P_f; f=0, 1, ..., F\}$ based on the control signal 826, and the time-domain broadband beamforming block 890 determines the wide-band precoding matrix Q based on the control signal 827.

The RRH 810 generates a number $N_{CSI-RS}$ of time-domain channel state information reference signals (CSI-RS), wherein the sequence of resource element mapping of the CSI-RS can be configured by either the DU 805 or the RRH 810. The antenna virtualization module 865 receives the $N_{CSI-RS}$ of time-domain CSI-RS signals.

According to the claimed invention, the RRH 810 constructs a time-domain CSI-RS by first generating CSI-RS sequences, next mapping the CSI-RS sequences to resource elements in the frequency domain, and then applying OFDM signal generation (IFFT, +CP). Finally, the antenna virtualization module 865 applies a CSI-RS specific antenna virtualization precoding to the $N_{CSI-RS}$ time-domain CSI-RS signals to generate N virtualized CSI-RS signals. The antenna virtualization module 865, by applying the CSI-RS specific antenna virtualization precoding, can generate wide beamwidth CSI-RS, narrow beamwidth CSI-RS, or a mixture of wide and narrow beamwidth CSI-RS. That is, the N virtualized CSI-RS signals can include wide, narrow, or both of wide and narrow beamwidth virtualized CSI-RS signals. The $N$ virtualized CSI-RS signals are added to the $N$ output data signals 895 to form N combined signals. The combined signals are then processed through the DACs 850, RF chains 860, and the power amplifier 870, and transmitted over the air by the antennas 880.

According to the claimed invention, to support a broad beamwidth of the common control signals (such as PBCH, CRS, PDCCH, PSS and SSS), the DU 805 stage includes a separate path to convert the common control signals to time domain. Certain embodiments of the DU 805 include a number $N_{CRS}$ of CRS ports, for example, more than one CRS port. For example, two CRS ports are used in the DU 805 of FIGURE 8A. The CPRI 815 carries the time domain signals 845a-b of the common control signals to RRH 810. An antenna virtualization module 865 maps the two streams 845a-b for N transmit streams. That is, the antenna virtualization module 865 receives and applies a common control signals specific antenna virtualization precoding to the $N_{CRS}$ time domain common control signals 845a-b in order to generate N virtualized common control signals. The antenna virtualization module 865, by applying the common control signals specific antenna virtualization precoding, can generate wide beamwidth CRS and wide beamwidth common control channels associated with CRS. The N virtualized common control signals include wide beamwidth CRS and wide beamwidth common control channels associated with CRS. More particularly, the antenna virtualization module 865 outputs N virtualized control signals 866 including the N virtualized common control signals combined with the N virtualized CSI-RS signals. The virtualized control signals 866 are added to the output data signals 895 and the combined signals are transmitted on N transmitter chains.

The multistage beamforming architectures 800, 900, and 1000, each provides comparable system performance compared to the FD-MIMO base station architectures 600 or 700. As an example, in the single stream case of $K = 1$, the transmitted signal samples are grouped into blocks of size $N_c$. Specifically, with no loss of generality, consider a block of size $N_c$ as follows: $s = [s_1 \ s_2 \cdots s_{Nc}]$, where s is the data stream.

The data stream 820 of size $N_c$ passes through a M × 1 frequency-selective precoder 830 $\mathbf{w}_i$, where $w_{im}$ is the mth entry of the precoding vector $\mathbf{w}_i$ (i.e., $\mathbf{w}_i = [w_{i1} \ w_{i2} \ ... \ w_{iM}]^T$ The output of the precoder 830 is $\mathbf{X} := [\mathbf{w}_1 s_1 \ \mathbf{w}_2 s_2 \ ... \ \mathbf{w}_{Nc} s_{Nc}]$ which has dimensionality of M×$N_c$. The mth row of the matrix $\mathbf{X}$ is defined as $\mathbf{x}_m = \mathbf{X}(m,:)$. After serial to parallel conversion, the input of the mth inverse fast Fourier transform (IFFT) operation is the vector $\mathbf{x}_m^T$ . The output of the IFFT operation is given by $\mathbf{F}^H \mathbf{x}_m^T$ for m=1,...M, where F denotes the discrete Fourier transform (DFT) matrix of size $N_c$ and $H$ denotes the Hermitian of a matrix. The $i$th entry of the column vector $\mathbf{t}_m$ is defined as $\mathbf{t}_m = \mathbf{F}^H \mathbf{x}_m^T$ and $t_{mi}$. Define $\mathbf{c}_i = [t_{1i} \ t_{2i} \ ... \ t_{Mi}]^T$ . For each time instant $i$, the vector $\mathbf{c}_i$ is precoded by a N × M time domain precoding matrix Qand the output of the time-domain precoder is given by $\mathbf{Qc}_1$, which is a N × 1 column vector. Define $p_{ni} = \mathbf{Q}(n,:)\mathbf{c}_i$ and $\mathbf{p}_n = [p_{n1} \ p_{n2} \ ... \ p_{nNc}]^T$. Appended by a cyclic prefix (CP), the sequence of the data stream $\{p_{ni}\}$ is transmitted over the nth transmit antenna. Mathematically, after the CP insertion, the transmitted block can be written as

$$\mathbf{T}_{cp}\mathbf{p}_n = \left[\mathbf{I}_{cp}^T \mathbf{I}_{Nc}^T\right]^T \mathbf{p}_n$$

, and then is transmitted over a ($L + 1$) tap multipath channel $\mathbf{h}_n = [h_n(0)...h_n(L)]$ after a serial-to-parallel conversion. At the receiver end, the CP is first removed and accordingly the received signals $\mathbf{y}_n$ from the $n^{th}$ transmit antenna can be written as $\mathbf{y}_n = \overline{\mathbf{H}}_n \mathbf{p}_n$ where $\overline{\mathbf{H}}_n$ is a $N_c \times N_c$ circulant matrix and the (k,l)th entry given by $h_n((k-l)modN_c)$ . By definition, the vector $\mathbf{p}_n$ can be rewritten as Equation (4)

$$\mathbf{p}_n = \begin{bmatrix} \mathbf{q}_1^T \\ \mathbf{q}_2^T \\ \vdots \\ \mathbf{q}_{Nc}^T \end{bmatrix} \mathbf{Q}^T(n,:) = \begin{bmatrix} \mathbf{t}_1 & \mathbf{t}_2 & ... & \mathbf{t}_M \end{bmatrix} \mathbf{Q}^T(n,:) = \mathbf{F}^H \begin{bmatrix} \mathbf{x}_1^T & \mathbf{x}_2^T & ... & \mathbf{x}_M^T \end{bmatrix} \mathbf{Q}^T(n,:)$$

$$(4)$$

At the receiver, the output of the FFT matrix is given by Equation (5):

$$\mathbf{y} = \mathbf{F}\sum_{n=1}^{N}\mathbf{y}_n = \sum_{n=1}^{N}\mathbf{F}\mathbf{H}_n\mathbf{F}^H \begin{bmatrix} \mathbf{x}_1^T & \mathbf{x}_2^T & ... & \mathbf{x}_M^T \end{bmatrix} \mathbf{Q}^T(n,:) = \sum_{n=1}^{N}\Lambda_n \sum_{m=1}^{M}q_{nm}\mathbf{x}_m^T = \sum_{n=1}^{N}\Lambda_n \sum_{m=1}^{M}q_{nm}\mathbf{x}_m^T$$

$$(5)$$

.

$$H_n(i) := \sum_{l=0}^{L} h_n(l)e^{j2\pi il/N_c}$$

where $\Lambda_n$ is a $N_c \times N_c$ diagonal matrix with diagonal entries for i = 1,...,$N_c$. At subcarrier $i$, the received signal $y_i$ is given by Equation (6):

$$y_i = \begin{bmatrix} H_1(i) & H_2(i) & ... & H_N(i) \end{bmatrix} \mathbf{Q}\mathbf{w}_i s_i.$$

$$(6)$$

An example choice for the wide-band beamforming matrix Qis

$$
\mathbf{Q} = \begin{bmatrix} e^{j\theta_{11}} & e^{j\theta_{12}} & \dots & e^{j\theta_{1M}} \\ e^{j\theta_{21}} & e^{j\theta_{22}} & \dots & e^{j\theta_{2M}} \\ \vdots & \vdots & \vdots & \vdots \\ e^{j\theta_{N1}} & e^{j\theta_{N2}} & \dots & e^{j\theta_{NM}} \end{bmatrix}.
$$

An appropriate design of the precoding vector $\mathbf{w}_i$ is needed to ensure the constant modulus property of the overall precoder. In this case, all elements in the Q matrix are digital phase shifter. These digital phase shifters can be implemented by complex multiplication arithmetic unit, or by using low complexity rotation logic, for example, in multiplier-less CORDIC functions.

As described above, the eNB according to embodiments of the present disclosure performs CQI prediction, for example, the beamforming control block 825 can implement CQI prediction. The eNB 401 implements link-adaptation methods to predict downlink signal-to-interference-plus-noise ratio (SINR) (also referred to as the signal-to-noise-plus-interference ratio (SNIR)) or channel quality information estimated at the transmitter (*Tx CQI*) to be used by the eNB 401 in performing modulation and coding scheme (MCS) selection. The eNB 401 implements the link-adaptation methods by using uplink sounding reference signals (SRS) and feedback *CQI* for the Tx CQI prediction.

As an example, the eNB implements a Tx CQI prediction method for single-user MIMO (SU-MIMO) for a UE having a single transmit antenna (1-Tx antenna UE). Tx CQI prediction can also be referred to as downlink SINR prediction. In the case of 1-Tx antenna UE, *Tx CQI* prediction method, the $UE_k$, having a UE index k, receives downlink signals (yk) with antenna virtualization ($\mathbf{w}_0$). The downlink signals that the $UE_k$ receives can be expressed by the following equation (7):

$$
\mathbf{y}_k = \mathbf{h}_k \mathbf{w}_0 s_0 + \mathbf{n}_k, \text{ for } k = 1, \dots, K
$$

$$
(7)
$$

where $\mathbf{h}_k$ is the channel direction vector for $UE_k$, which is estimated at the eNB utilizing SRS transmitted by the UE's single transmit antenna. Also, $s_0$ is a transmission symbol, and $\mathbf{n}_k$ is noise at the $UE_k$ receiver. The $UE_k$ feeds back a feedback CQI ($\rho_{0k}$) to the eNB, and in this example, the feedback CQI ($\rho_{0k}$) is equal to the corresponding SINR estimated at the 1-Tx antenna UE, as expressed by the equation (8) below.

$$
\rho_{0k} = \frac{|\mathbf{h}_k \mathbf{w}_0|^2}{\sigma_k^2} \tag{8}
$$

where $\sigma_k^2$ is the receiver noise variance, which is unknown to the eNB. When the UE-specific precoder $\mathbf{w}_k$ is applied in place of the antenna virtualization procoder ($\mathbf{w}_0$), the downlink Tx SINR $\rho_k$ for data symbols is expressed according to equation (9) below.

$$
\rho_k = \frac{|\mathbf{h}_k \mathbf{w}_k|^2}{\sigma_k^2} \tag{9}
$$

As the eNB is aware of the channel direction vector $h_k$ via SRS channel estimates, the eNB can obtain SINR for data channels (or Tx CQI) according to the relationship expressed in equation (10):

$$
\rho_k = \frac{|\mathbf{h}_k \mathbf{w}_k|^2}{|\mathbf{h}_k \mathbf{w}_0|^2} \rho_{0k} \tag{10}
$$

where $\rho_{0k}$ is feedback CQI, $\mathbf{w}_0$ is the antenna virtualization precoder; and $\mathbf{w}_k$ is the UE-specific precoder $\mathbf{w}_k$. Once the eNB obtains the Tx CQI, the eNB can use the Tx CQI for link adaptation, for example, for determining MCS for the UE. Accordingly, the Tx CQI prediction method for SU-MIMO for 1-Tx antenna UE works well, achieving 10% normalized prediction error if there is no MU-MIMO transmission. In case of MU-MIMO, the CQI prediction is more difficult.

As another example, the eNB implements a Tx CQI prediction method for multiple-user MIMO (MU-MIMO) for a 1-Tx antenna UE with one CQI and one SRS. In this example, the eNB implements a method of predicting SINRs for MU-MIMO transmissions, in which a single layer of information is transmitted per UE, when a UE transmits a single SRS and feeds back one CQI. In this example, the Tx CQI prediction method includes: mapping the CQI into SINR ($\rho_0$) based on a certain or specified mapping; obtaining channel estimate based on one SRS, wherein the downlink SNR is different from uplink SNR estimated using SRS; and reconstructing SINR or MU-CQI based on an SRS channel estimation. More particularly, in this example, the SRS can be expressed by equation (11):

$$SRS = \mu_1 h_1 \tag{11}$$

where $\mathbf{h}_l$ for one transmit antenna and for $N_r$ receive antennas is the $1 \times N_r$ normalized channel direction vector, and $\mu_l$ is the power associated with this channel for $UE_l$, namely a UE having a UE index of $l$. CQI mismatch causes the downlink channel SNR or downlink channel power to be different from the uplink SNR estimated with SRS. Also in this example, the eNB reconstructs or recalculates the SINR or MU-CQI based on the SRS channel estimation.

In the example wherein the eNB implements a Tx CQI prediction method for multiple-user MIMO (MU-MIMO) for a 1-Tx antenna UE with one CQI and one SRS, at the receiver of the $UE_l$, the multiple user SINR can be predicted using equation (12) below:

$$SINR_{l,MU} = \frac{P|\boldsymbol{h}_l \boldsymbol{w}_l|^2}{L\sigma_l^2 + \sum_{i \in M-l}|\boldsymbol{h}_l \boldsymbol{w}_i|^2} \tag{12}$$

In equation (#), $M$ represents the set of the co-scheduled UEs with cardinality $L$, $P$ represents the total transmitted power at eNodeB, $\sigma_l^2$ represents noise power at $UE_l$, and $\mathbf{w}_l$ represents the precoding vector for the $l^{th}$ UE. In this example, the UE computes its SINR (CQI) and the basis that the eNB employs conjugate beamforming with the total transmitted power P. That is, the precoding vector of $UE_l$ is equal to $\boldsymbol{h}_l^H$, where H represents a Hermitian operation. The UE computes the single user SINR (or feedback CQI) according to equation (13) below:

$$SINR_{l,SU} = \frac{P\|\boldsymbol{h}_l\|^2}{\sigma_l^2} \tag{13}$$

In the case of conjugate beamforming, the eNB implements a Tx CQI prediction method or MU-SINR prediction method for multiple-user MIMO (MU-MIMO) for a 1-Tx antenna UE with one CQI and one SRS. The eNB computes the MU-SINR using equation (14) below.

$$SINR_{l,MU} = \frac{SINR_{l,SU}}{SINR_{l,SU}\sum_{i \in M-l}\rho_{li}^2 + L} \tag{14}$$

In equation (#), by definition, the correlation coefficient $\rho_{li}$ is expressed according to equation (15).

$$\rho_{li} = |<\frac{h_l}{\|h_l\|}, \frac{h_i}{\|h_i\|}>| \tag{15}$$

Once the eNB has calculated or obtained L Tx CQIs, one Tx CQI for each of the L MU-MIMO UEs, the eNB uses the Tx CQI for link adaptation, for example, for determining MCS for each UE participating in the MU-MIMO transmission.

As another example, the eNB implements a Tx CQI prediction method for single-user MIMO (SU-MIMO) for a UE having two transmit antennas (2-Tx antenna UE) with one CQI and two SRS. In this example, the eNB implements a method of predicting SINRs for SU-MIMO transmissions, in which the eNB transmits two layers of information to a UE when a 2-Tx antenna UE transmits two SRS and feeds back one CQI. In this example, the Tx CQI prediction method includes: mapping CQI into SINR $\rho_0$ based on a specified mapping; obtaining channel estimates based on the SRSs, wherein the downlink SNR or power is different from uplink SNR or power; reconstructing or recalculating the SINR or CQI based on an SRS channel estimation; and estimating downlink channel coefficient vectors by using channel estimates of SRS and the predicting CQI values. More particularly, in this example, the SRS of the two antennas can be expressed by equations (16) and (17):

$$SRS_1 = \mu_1 h_1 \qquad (16)$$

$$SRS_2 = \mu_2 h_2 \qquad (17)$$

where $\mathbf{h}_i = [h_{1i}\, h_{2i}]$ (for 2 transmit antennas) or $\mathbf{h}_i = [h_{1i}\, h_{2i}\, h_{3i}\, h_{4i}]$ represents the normalized channel direction vector, and $\mu_i$ represents the power associated with this channel, which is unknown in the obtaining step of the Tx CQI prediction method. CQI mismatch causes the downlink channel SNR or downlink channel power to be different from the uplink SNR.
In the example wherein the eNB implements a Tx CQI prediction method for SU-MIMO for a 2-Tx antenna UE with one CQI and two SRS, the eNB reconstructs the SINR by calculating the SINR per subcarrier per antenna using equations (18) and (19) below:

$$\mathrm{SINR}_{\mathrm{rx}(1)} = \frac{|h_{11}|^2 + |h_{21}|^2}{2 \times \mathrm{int\ var}} \qquad (18)$$

$$\mathrm{SINR}_{\mathrm{rx}(2)} = \frac{|h_{12}|^2 + |h_{22}|^2}{2 \times \mathrm{int\ var}} \qquad (19)$$

In equations (18) and (19), the "int var" represents the estimate of interference plus noise power of a UE, and the interference may include inter-cell interference.
In the example wherein the eNB implements a Tx CQI prediction method for SU-MIMO for a 4-Tx antenna UE, the eNB reconstructs the SINR by calculating the SINR per subcarrier per antenna using equations (20), (21), and (22) below :

$$\mathrm{SINR}_{\mathrm{rx}(i),1} = \frac{|h_{1i}|^2 + |h_{2i}|^2}{2 \times \mathrm{int\ var}} \qquad (20)$$

$$\mathrm{SINR}_{\mathrm{rx}(i),2} = \frac{|h_{3i}|^2 + |h_{4i}|^2}{2 \times \mathrm{int\ var}} \qquad (21)$$

$$\mathrm{SINR}_{\mathrm{rx}(i)} = Average([\mathrm{SINR}_{\mathrm{rx}(i),1}, \mathrm{SINR}_{\mathrm{rx}(i),2}]) \qquad (22)$$

In equations (20), (21), and (22), the *Average*() is a function to average SINRs across a total number of assigned resource elements. The averaged SINR is a single SINR value characterizing the frame error rate of a packet transmitted in the assigned resource elements. For example, the Average() can be an effective exponential SNR mapping (*EESM*)function, which by definition is defined according to equation (23) below.

$$EESM(\boldsymbol{X}) = -\lambda \ln\left(\frac{1}{N}\sum_{l=1}^{N} e^{-X_l/\lambda}\right) \qquad (23)$$

In equation (#),$\boldsymbol{X}$: $= [X_1, ..., X_N]$ and $\lambda$ represents a parameter related to MCS order. An example of an MCS order includes 2, 4 and 6 for QPSK, 16QAM and 64QAM respectively.

In the example wherein the eNB implements a Tx CQI prediction method for SU-MIMO for a 2-Tx antenna UE with one CQI and two SRS, the eNB reconstructs the SINR by calculating the SINR per subcarrier using equation (24) below:

$$SINR_{sc} = SINR_{rx(1)} + SINR_{rx(2)} \qquad (24)$$

In the example wherein the eNB implements a Tx CQI prediction method for SU-MIMO for a 2-Tx antenna UE with one CQI and two SRS, the eNB reconstructs the SINR by obtaining the overall predicted SINR $\rho_1$ (Tx CQI) for each UE. Also, in this example, the eNB estimates downlink channel coefficient vectors using channel estimates of SRS and the predicted CQI values, where the predicted CQI values are expressed by a normalized channel vector h multiplied by a scaling factor $\mu$. That is, the predicted CQI values are expressed as $\mu$h, where n is the ratio of downlink power and uplink power, and where $\mu$ is calculated according to equation (25):

$$\mu = \sqrt{\frac{\rho_1}{\rho_0}} \qquad (25)$$

FIGURE 8B, the multistage beamforming architecture 801 includes components of the architecture 800 as implemented in an integrated base station unit.

FIGURE 9 illustrates another example of multistage (for example, two-stage) beamforming architecture for multiple-antenna wireless communication system. In the multistage beamforming architecture 900, the number of CSI-RS ports can be different (for example, greater) than the number of CRS ports. The multistage beamforming architecture 900 multiplexes CSI-RS in the time domain, but to keep complexity low, CRS and corresponding channels of PBCH, PDCCH, PSS/SSS, and CRS-based PDSCH are multiplexed in the frequency domain. The multistage beamforming architecture 900 includes a data unit (DU) 905 and a remote radio head (RRH) 910 coupled to each other by a CPRI interface 915. The DU 905 includes a beamforming control block 925, a precoding block 930, a number M of resource element mappers 941, a number $N_{CRS}$ of resource element mappers (including a common signals resource element mapper 941a and a CRS-PDSCH resource element mapper 941b), a common signals antenna virtualization module 937, a number M of IFFT blocks 940. The DU 905 also includes a number M of adders 939, and each adder 939 adds one of the antenna virtualized common signals to a respective one of the RE mapped streams and outputs a combined signal to a respective IFFT block 940. The IFFT block 940 may be referred as an 'OFDM modulation unit'. The beamforming control block 925 generates beamforming control signals 926-927 based on received PMI and/or CSI. The RRH 910 receives M time-domain signals 945 and the beamforming control signal 927 from the DU 805 and generates the CSI-RS signals. The RRH 910 includes N digital-to-analog converters (DAC) 950, *N* radio frequency (RF) chains 960, a CSI-RS antenna virtualization module 965, and *N* power amplifiers 970, *N* antennas 980, and a time-domain broadband beamforming block 990. The CSI-RS antenna virtualization module 965 maps the CSI-RS signals into a beam pattern so that the CSI-RS signal can be transmitted across the entire cell. The RRH 910 also includes a number N of adders 967, and each adder 967 adds one of the N antenna virtualized CSI-RS signals to a respective one of the N time-domain broadband beamformed streams 995 and outputs a combined signal to a respective DAC 950.

In certain embodiments, the resource element mappers 941a and 941b are identical to the resource element mappers 941. Also note that components 920, 925, 930, 935, 950, 960, 970, 980, and 990 in FIGURE 9 could be the same as or similar to corresponding components 820, 825, 830, 835, 850, 860, 870, 880, and 890 in FIGURE 8A. These components in FIGURE 9 can operate in the same or similar manner as the corresponding components in FIGURE 8A.

In FIGURE 9, the common signals (for example, Cell-specific Reference Signals (CRS), CSI-RS, PDCCH, PBCH, and PSS/SSS) and CRS-PDSCH are multiplexed in the frequency domain, and by comparison, the CRS-PDSCH and common signals in FIGURE 8A are mapped in the time domain. By multiplexing the common signals and CRS-PDSCH in the frequency domain (for example, in the DU 805), the multistage beamforming architecture 900 saves (or does not use) the two (or $N_{CRS}$) CPRI interfaces that the multistage beamforming architecture 800 uses for transmitting the common signals and CRS-PDSCH from the DU 805 to the RRH 810. More particularly, the multistage beamforming architecture 900 multiplexes the common signals and CRS-PDSCH in the frequency domain after the RE mapping 940 and OFDM signal generation blocks process the common signals and CRS-PDSCH. For example the CPRI 915 carries data traffic 945 from M IFFT blocks 940, yet the CPRI 815 carries data traffic 845 and common control channel information 845a-b from $N_{CRS}$+M IFFT blocks 840 and 840a-b.

The multistage beamforming architecture 900 provides several technical advantages. For example, the frequency domain processing is reduced; the number of IFFT blocks (for example, $N_{CRS}$ fewer IFFT blocks) is reduced; the data traffic between baseband unit (for example, DU) and RF unit (for example, RRH) is reduced; and the time domain beamforming operation can be implemented in a digital domain without using any RF phase shifters.

FIGURE 10 illustrates an example of multistage (for example, two-stage) beamforming architecture for multiple-antenna wireless communication systems, not falling into the scope of the claimed invention. In the multistage beamforming architecture 1000, CRS, CSI-RS and corresponding channels of PBCH, PDCCH, PSS/SSS, and CRS-based PDSCH are multiplexed in the frequency domain after virtualization. That is, the multistage beamforming architecture 1000 reduces potential issues and complexity associated with insertion signals in the time domain. The multistage beamforming architecture 1000 includes a data unit (DU) 1005 and a remote radio head (RRH) 1010 coupled to each other by a CPRI interface 1015. The DU 1005 includes a beamforming control block 925, a frequency selective precoding block 1030, a number M of adders 1039, a common signals antenna virtualization module 1037, a number $M$ of IFFT blocks 1040, and a number $M$ of cyclic prefix modules 1042. Each adder 1039 adds one of the M antenna virtualized common signals to a respective one of the M frequency precoded streams and outputs a combined signal to a respective IFFT block 1040. The IFFT blocks 1040 perform an IFFT process on the M combined signals and outputs a time-domain signals 1047 to the cyclic prefix module 1042. The IFFT block 1040 may be referred as an 'OFDM modulation unit'. The cyclic prefix modules 1042 add a cyclic prefix to the time-domain signals 1047 and output a number $M$ of OFDM time-domain signals 1045 to the time-domain broadband beamforming block 1090 through the CPRI interface 1015. The beamforming control block 1025 generates beamforming control signals 1026-1027 based on received PMI and/or CSI. The RRH 1010 receives $M$ time-domain signals 1045 and the beamforming control signal 1027 from the DU 1005. In this example, the DU 1005 generates the CSI-RS signals that are inputted to the antenna virtualization module 1037. The RRH 1010 includes N digital-to-analog converters (DAC) 1050, $N$ radio frequency (RF) chains 1060, a number $N$ of adders 1067, and $N$ power amplifiers 1070, $N$ antennas 1080, and a time-domain broadband beamforming block 1090.

Note that components 1020, 1025, 1030, 1035, 1050, 1060, 1070, 1080, and 1090 in FIGURE 10 could be the same as or similar to corresponding components 820, 825, 830, 835, 850, 860, 870, 880, and 890 in FIGURE 8A. These components in FIGURE 10 can operate in the same or similar manner as the corresponding components in FIGURE 8A. Note that component 1037 in FIGURE 10 could be the same as or similar to corresponding component 937 in FIGURE 9. These components in FIGURE 10 can operate in the same or similar manner as the corresponding components in FIGURE 9.

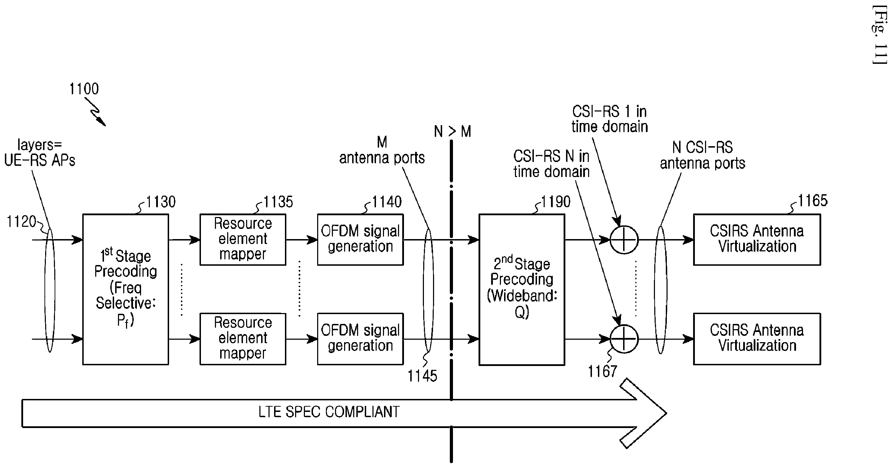

FIGURE 11 illustrates a CSI-RS mapping scheme in a multistage beamforming system according to unclaimed aspects of the present disclosure. The CSI-RS mapping scheme 1100 can be implemented where the first beamforming stage (such as DU 905) and second beamforming stage (such as RRH 910) are disposed in the same processing unit, as shown in the multistage beamforming architecture 900 of FIGURE 9. The CSI-RS mapping scheme 1100 shown in FIGURE 11 is for illustration only.

In frequency-division multiplexing systems (e.g., frequency-division duplexing (FDD) systems), the UE (for example, UE 411) feeds back PMI precoder at subband f: The eNB (for example, eNB 401) calculates the wide-band precoding matrix Q and frequency-domain precoding matrix $P_f$ such that $W_f = QP_f$ for each subband f. In CSI-RS mapping, the baseline is defined as one CSI-RS per CSI-RS AP. The alternative is defined by horizontal CSI RS mapping and vertical CSI RS mapping, which requires a number $N_V + N_H$ CSI-RS signals equal to the sum of the number of antennas ($N_V$) per column and the number ($N_H$) of antennas per row.

In time-division multiplexing systems (e.g., time-division duplexing (TDD) systems), the eNB (for example, eNB 401) determines $W_f$, and a single CSI-RS is sufficient.

As shown in FIGURE 11, the CSI-RS mapping scheme 1100 includes a frequency selective precoding block 1130, multiple resource element mappers 1135, multiple OFDM signal generation modules 1140, a time-domain broadband beamforming block 1190, a number N of adders 1167, and a number N of CSI-RS antenna virtualization modules 1165. Note that components 1130, 1135, 1140, 1190, 1167, and 1165 in FIGURE 11 could be the same as or similar to corresponding components 930, 941, 940, 990, 967, and 965 in FIGURE 9. These components in FIGURE 11 can operate in the same or similar manner as the corresponding components in FIGURE 11.

More particularly, the CSI-RS mapping scheme 1100 receives multiple layers 1120 of resource signals (RS) from the antenna ports (APs) of a UE (for example, UE 411).

The frequency selective precoder 1130 precodes the layers 1120 by applying a frequency selective precoding matrix $P_f$. For each received layer 1120, the frequency selective precoder 1130 outputs a precoded frequency-domain signal to a respective resource element mapper 1135.

Each resource element mapper 1135 corresponds with a respective OFDM signal generator 1140. Each resource element mapper 1135 maps the received layer 1120 to resource elements, and the corresponding OFDM signal generator 1140 uses the RE-mapped layer to output antenna port signals 1145 for M antenna ports.

As the number (N) of transmit streams is greater than the number (M) of OFDM signals (i.e., N>M), the second stage precoding block 1190 multiplies a wideband precoding matrix Q by $M$ input signals 1145 and generates $N$ output signals 1195.

The CSI-RS mapping scheme 1100 includes a number N of adders 1167, each adder corresponding to a respective received layer 1120. Each adder 1167 receives and adds one of the $N$ antenna virtualized CSI-RS signals to a respective one of the $N$ time-domain broadband beamformed layers 1195 and outputs a combined signal to a respective CSI-RS antenna virtualization module 1165.

FIGURE 12 illustrates a control signal virtualization and multiplexing method according to unclaimed aspects of the present disclosure. The control signal virtualization and multiplexing method 1200 can be implemented in the multistage beamforming architectures of FIGURES 9-10. The control signal virtualization and multiplexing method 1200 designs CRS virtualization coefficients whose combined effect with time-domain broadband precoding creates a wide beamwidth. The process 1200 shown in FIGURE 12 is for illustration only.

In this particular example, control signals are virtualized and multiplexed with data signals in frequency domain, which reduces the number of CPRI interfaces and the number of IFFT modules needed. In FIGURES 9-10, two CRS ports are mapped, yielding a wide beamwidth signal at the antenna ports. Other control signals, such as PDCCH, PBCH, PSS, SSS as well as the PDSCH relying on CRS, can be processed in a similar flow. The control signals that are mapped to the wide beamwidth signals, when transmitted from the N transmit streams and multiple physical antennas 980, 1080 form the broadcast wide beam 1205.

Also in FIGURES 9-10, the K data streams 920, 1020 are mapped, yielding multiple narrow beamwidth signals at the antenna ports. The narrow beamwidth signals of user-specific data, when transmitted from the N transmit streams and multiple physical antennas 980, 1080, form the narrow beams 1220-1227 ($a_1$ and $a_2$). The user-specific data, narrow widths of the beams 1220-1227 increases signal-to-noise ratios at the receiver UE.

The terms $p_{crs,0}$ and $p_{crs,1}$ denote two frequency domain virtualization length M vectors for CRS port 0 and CRS port 1, where $p_{crs,i} = [p_{1i}, p_{2i}, \cdots, p_{Mi}]$ for $i = 0,1$. Equation (26) defines the signal after IFFT processing and adding CP:

$$y = \sum_{i=1}^{M} q_i x_i' = Qx' \tag{26}$$

The term $S_{crs,i}$ denotes the CRS RE. The term $p_{crs,i}$ is a wideband precoder in the sense that all the CRS REs in the entire frequency band will be multiplied by the same coefficient before multiplexing with the data stream j. Therefore, the IFFT operation does not change the effective precoding applied to CRS REs (i.e., for CRS REs a common coefficient can be extracted out). The term $S_{crs,i}$ is determined after the IFFT operation. The IFFT is a linear operation performed per antenna. Equation (27) expresses the CRS signal in a time sample (mixed with other signals):

$$Qp_{crs,i}s'_{crs,i} = (\sum_{j=1}^{M} p_{ji}q_j)s'_{crs,i} \tag{27}$$

In certain aspects, the virtualization vectors are expressed as $p_{crs,i} = [p_{1i}, p_{2i}, ..., p_{Mi}]$, such that $(\sum_{j=1}^{M} p_{ji}q_j)$ has a wide beamwidth.

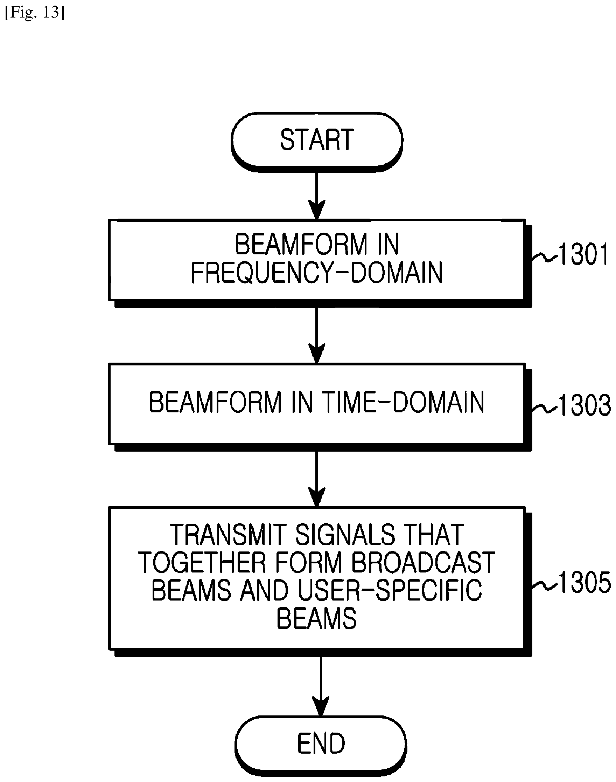

FIGURE 13 illustrates an operation procedure of a transmitter according to unclaimed aspects of the present disclosure. FIGURE 13 exemplifies a method for operating the base station or the multistage beamforming circuit.

Referring FIGURE 13, in step 1301, the transmitter beamforms in a frequency-domain. That is, the transmitter performs a beamforming by converting K data streams into M output stream. Herein, the transmitter applies frequency-selective precoding matrices for the beamforming.

In step 1303, the transmitter beamforms in a time-domain. Herein, the transmitter applies wide-band precoding matrices for the beamforming. That is, the transmitter performs a beamforming by converting the M OFDM signals into N signals. Specifically, the transmitter generate M OFDM signals by transforming the M output streams into the M OFDM signals, and converts the M OFDM signals into the N signals. In various aspects, the M OFDM signals may include at least one of virtualized common control signals and virtualized CSI-RSs. Herein, the number N is greater than the number M.

In step 1305, the transmitter transmits the N signals that together form broadcast beams and user-specific beams. In various aspects, the N signals may includes at least one of preceded signals using a wide-band precoding matrix, virtualized CSI-RSs, and, virtualized common control signals.

Although not illustrated in FIG. 13, the transmitter may receive uplink feedback information including at least one of a PMI and CSI. After then, the transmitter may determine the frequency-selective precoding matrices in the frequency domain and the wide-band precoding matrix in the time domain based on the uplink feedback information.

In certain aspects, a multistage beamforming circuit in a wireless communication network may include a data unit configured to implement a frequency domain beamforming stage by converting K received data streams into M precoding output streams in a frequency-domain, and transform the M output streams to M OFDM time-domain signals, and, a remote radio head configured to implement a time-domain broadband beamforming stage by converting the M OFDM time-domain signals into N transmit streams of time-domain samples. The remote radio head comprising a transmit antenna array configured to transmit the N transmit streams that together form broadcast beams and user-specific beams, the antenna array including a plurality of physical antennas, Herein the number N of transmit streams is greater than the number M of precoding output streams.

In the multistage beamforming circuit, the data unit may include a frequency domain precoding module configured to receive and precode the K input streams into the M precoding output streams by applying frequency domain precoding matrices, M IFFT processing blocks for processing the M precoding output streams to yield the M OFDM time-domain signals. Herein, each IFFT processing block configured to receive a frequency-domain signal, map the frequency-domain signal to resource elements in a frequency domain, transform the frequency-domain signal to a stream of time domain samples, and add a cyclical prefix to the stream of time domain samples yielding an OFDM time-domain signal.

In the multistage beamforming circuit, the data unit further may include NCRS CRS ports configured to receive common control signals as frequency domain signals, and, NCRS IFFT processing blocks for processing the common control signals to yield NCRS OFDM time-domain signals. The data unit further may include an antenna virtualization module configured to receive NCRS common control signals as frequency domain signals, and apply a common control signals specific antenna virtualization precoding to the NCRS frequency domain common signals to generate M virtualized common control signals, and M adders configured to combine the M virtualized common control signals with the M precoding output streams.

In the multistage beamforming circuit, the antenna virtualization module is further configured to receive NCSI-RS frequency-domain CSI-RS signals, and apply a CSI-RS specific antenna virtualization precoding to the NCSI-RS frequency-domain CSI-RS signals to generate M virtualized CSI-RS signals. Herein, the M adders are further configured to combine the M virtualized CSI-RS signals with the M precoding output streams.

The multistage beamforming circuit further may include a beamforming control module configured to receive uplink feedback including at least one of PMI and CSI, and, generate beamforming control signals based on the feedback. Herein, the beamforming control signals may include a first beamforming control signal configured to control the frequency domain precoding module to select the frequency domain precoding matrices, and, a second beamforming control signals configured to control a time-domain broadband beamforming module to select a wide-band precoding matrix.

In the multistage beamforming circuit, the remote radio head may further include a time-domain broadband beamforming module that may include a precoding matrix having at least one of rows that are Discrete Fourier Transform (DFT) vectors, and, columns that are DFT vectors. The broadcast beams indues a wide beamwidth CRS, wide beam width CSI-RSs, and wide beamwidth common control channels associated with the CRS and including at least one of Physical Downlink Control Channel and Physical Broadcast Channel. The user-specific beams may include narrow beamwidth CSI-RS, narrow beamwidth user equipment specific reference signal (UE-RS), and, narrow beamwidth UE data channels associated with UE-RS.

In the multistage beamforming circuit, the remote radio head may include a time-domain broadband beamforming module configured to receive and precode the M output streams into the N precoded output signals using a wide-band precoding matrix, and, N transmission paths respectively coupled to at least one of the physical antennas. Herein, each transmission path may include a series of a digital-to-analog converter, a mixer, and a power amplifier together configured to form a respective one of the N transmit streams using a respective one of the N precoded output signals.

In the multistage beamforming circuit, the remote radio head further may include an antenna virtualization module configured to receive NCSI-RS time-domain CSI-RS signals and apply a CSI-RS specific antenna virtualization precoding to the NCSI-RS time-domain CSI-RS signals to generate N virtualized CSI-RS signals, and N adders configured to combine the N virtualized CSI-RS signals with the N precoded output signals.

In the multistage beamforming circuit, the antenna virtualization module is further configured to receive NCRS common control time-domain signals from the data unit, and, apply a common control signals specific antenna virtualization precoding to the NCRS time domain common signals to generate N virtualized common control signals. Herein, the N adders are further configured to combine the N virtualized common control signals with the N precoded output signals.

The multistage beamforming circuit may include a CPRI interface configured to transmit the M precoding output streams from the data unit to the remote radio head.

In certain aspects, a multistage beamforming method includes implementing a frequency domain beamforming stage by converting K data streams in a frequency-domain into M precoding output streams in a frequency domain, transforming the M output streams to M OFDM time-domain signals, implementing a time-domain broadband beamforming stage by converting the M OFDM time-domain signals into N transmit streams of time-domain samples, and, transmitting, by a transmit antenna array including a plurality of physical antennas, the N transmit streams that together form broadcast beams and user-specific beams. Herein, the number N of physical antennas is greater than the number M of precoding output streams.

In the multistage beamforming method, the converting K data streams in a frequency-domain into the M precoding output streams includes receiving and precoding the K data streams into M precoding output streams by applying frequency domain precoding matrices. The transforming the M output streams to M OFDM time-domain signals includes mapping the M output streams to resource elements in a frequency domain, transforming the M mapped frequency-domain signals to M streams of time domain samples using IFFT, and adding a cyclical prefix to each of the M streams of time domain samples yielding the M OFDM time-domain signals.

In the multistage beamforming method, the converting the M OFDM time-domain signals into the N transmit streams includes receiving and precoding the M OFDM time-domain signals into the N transmit streams of time-domain samples using a wide-band precoding matrix.

The multistage beamforming method may further include applying a common control signals specific antenna virtualization precoding to common control signals to generate N virtualized common control signals in the time domain, combining the N virtualized common control signals with the N transmit streams, applying a common control signals specific antenna virtualization precoding to common control signals to generate M virtualized common control signals in the frequency domain, and, combining the M virtualized common control signals with the M precoding output streams. The multistage beamforming method may further include one of, applying a CSI-RS specific antenna virtualization precoding to time-domain CSI-RS signals to generate N virtualized CSI-RS signals, and combining the N virtualized CSI-RS signals with the N transmit streams, and, applying a CSI-RS specific antenna virtualization precoding to frequency-domain CSI-RS signals to generate M virtualized CSI-RS signals, and combining the M virtualized CSI-RS signals with the with the M precoding output streams.

In the multistage beamforming method, the converting the M OFDM time-domain signals into the N transmit streams of time-domain samples includes using a precoding matrix having at least one of, rows that are DFT vectors, and columns that are DFT vectors. The broadcast beams includes, a wide beamwidth CRS, wide beam width CSI-RS, and wide beamwidth common control channels associated with the CRS and including at least one of: Physical Downlink Control Channel and Physical Broadcast Channel. The user-specific beams includes narrow beamwidth CSI-RS, narrow beamwidth UE-RS, and narrow beamwidth UE data channels associated with UE-RS.

In certain aspects, a base station includes a data unit configured to implement a frequency domain beamforming stage. The data unit includes a frequency domain precoding module configured to receive and precode the K data streams into M precoding output streams in a frequency domain by applying frequency domain precoding matrices, M pairs of an IFFT processing block coupled to M cyclic prefix processing block, and, a RRH configured to implement a time-domain broadband beamforming stage by converting the M orthogonal frequency-division multiplexing (OFDM) time-domain signals into N transmit streams of time-domain samples. Each pair transforms the M output streams into M OFDM time-domain signals, each IFFT processing block transforms a received frequency-domain signal to a stream of time domain samples, and, each cyclic prefix processing block adds a cyclical prefix to the stream of time domain samples to generate the M precoding output streams. The RRH includes a time-domain broadband beamforming module configured to receive and precode the M output streams into N precoded output signals using a wide-band precoding matrix, a transmit antenna array configured to transmit the N transmit streams that together form broadcast beams and user-specific beams, the antenna array including a plurality of physical antennas. The number N of transmit streams is greater than the number M of precoding output streams in the time domain.

In the base station, the data unit may further include NCRS CRS ports configured to receive common control signals as frequency domain signals, and, NCRS IFFT processing blocks for processing the common control signals to yield NCRS OFDM time-domain signals.

In the base station, the data unit may further include NCRS cell-specific reference signal (CRS) ports that receive common control signals in the frequency-domain, M resource element mappers configured to map the M precoding output streams to resource elements in a frequency domain, and, NCRS resource element mappers configured to map the common control signals to resource elements in the frequency domain, an antenna virtualization module configured to apply a common control signals specific antenna virtualization precoding to the NCRS resource-element-mapped common control signals to generate M virtualized common control signals in the frequency domain, and, M adders where each of the M adders configured to combine the M virtualized common control signals with the M resource-element-mapped precoding output streams. Herein, the each of the M herein each IFFT processing blocks is coupled to a respective one of the M adders and further configured to receive the combined frequency-domain signal from the adder as the received frequency-domain signal.

In the base station, the data unit may further include NCRS CRS ports, each CRS port configured to receive common control signals in the frequency-domain, NCSI-RS CSI-RS ports where each CSI-RS port configured to receive CSI-RS signals in the frequency-domain, an antenna virtualization module configured to apply a common control signals specific antenna virtualization precoding to the NCRS common control signals to generate M virtualized common control signals in the frequency domain, and to apply a CSI-RS specific antenna virtualization precoding to the NCSI-RS frequency-domain CSI-RS signals to generate M virtualized CSI-RS signals, M adders configured to combine the M virtualized CSI-RS signals with the M precoding output streams. Each adder configured to combine a respective one of the M virtualized common control signals with a respective one of the M precoding output streams. Herein, each of the M IFFT processing blocks is coupled to a respective one of the M adders and further configured to receive a combined frequency-domain signal from the adder as the received frequency-domain signal.

In the base station, the time-domain broadband beamforming module includes a precoding matrix having at least one of rows that are DFT vectors, and, columns that are DFT vectors. The broadcast beams includes a wide beamwidth CRS, wide beam width CSI-RS, and, wide beamwidth common control channels associated with the CRS and including at least one of: Physical Downlink Control Channel and Physical Broadcast Channel. The user-specific beams includes narrow beamwidth CSI-RS, narrow beamwidth UE-RS, and, narrow beamwidth UE data channels associated with UE-RS .

In the base station, the remote radio head may further include an antenna virtualization module configured to receive NCSI-RS time-domain CSI-RS signals and to apply a CSI-RS specific antenna virtualization precoding to the NCSI-RS time-domain CSI-RS signals to generate N virtualized CSI-RS signals, and, N adders configured to combine the N virtualized CSI-RS signals with the N precoded output signals.

In the base station, the antenna virtualization module is further configured to receive NCRS common control time-domain signals from the data unit, and to apply a common control signals specific antenna virtualization precoding to the NCRS time domain common signals to generate N virtualized common control signals. Herein, the N adders are further configured to combine the N virtualized common control signals with the N precoded output signals.

The base station may further includes a beamforming control module configured to receive uplink feedback including at least one of PMI and CSI, and based on the feedback, generate beamforming control signals. The beamforming control signals include a first beamforming control signal configured to control the frequency domain precoding module to select the frequency domain precoding matrices, and a second beamforming control signals configured to control a time-domain broadband beamforming module to select a wide-band precoding matrix.

The various aspects of a multistage beamforming architecture 800, 900, 1000 described above reduce baseband computation and reduce the throughput requirement between the DU and RRH. Table 1 summarizes a particular non-limiting example of calculated savings in of baseband computations and throughput requirements of a multistage beamforming architecture (for example, M<N) compared to a conventional architecture (for example, M=N). Other examples can yield different results of cost savings. The complexity of the transmission system does not increase with an increase in the number of transmit antennas, but depends on the number of data streams n precoding.

Table 1: Summary of savings in complexity by using multistage beamforming scheme

|  | Conventional implementation | Multistage beamforming | Savings |
|---|---|---|---|
| K number of data streams | 8 | 8 | |
| M number of f-domain precoder output | 32 | 8 | 4x |
| N number of antennas | 32 | 32 | |
| LTE REs @20MHz | 1200 | 1200 | |
| CPRI throughput (Gbps) | 32 | 9 | 3.5x |

Although the present disclosure has been described with exemplary aspects, various changes and modifications may be suggested to one skilled in the art. It is intended that the present disclosure encompass such changes and modifications as fall within the scope which is solely defined by the appended claims.

## Claims

1. A method for operating a transmitter supporting multiuser multiple-input-multiple-output, MU-MIMO, in a wireless communication network, the method comprising:

   generating precoding output streams (835) by applying frequency selective precoding matrices (Pf) to data streams (820, 920, 1020);
   generating M orthogonal frequency-division multiplexing, OFDM, time-domain signals (845) by applying an inverse fast Fourier transform, IFFT, to the precoding output streams (835);

generating N transmit streams by

generating precoded output signals (895) by applying a wide-band precoding matrix (Q) for a time-domain (890, 990, 1090) to the M OFDM time-domain signals (845), wherein the wide-band precoding matrix (Q) is determined such that a total precoding for the N transmit streams corresponds to a multiplication of the frequency selective precoding matrices (Pf) for a respective subband (f) by the wide-band precoding matrix (Q), wherein the number N is greater than the number M,
generating the N transmit streams using the precoded output signals (895), and
either applying a CSI-RS specific antenna virtualization precoding to time-domain CSI-RSs to generate virtualized CSI-RSs and combining the virtualized CSI-RSs with the precoded output signals (895) or applying a common control signals specific antenna virtualization precoding to time domain common control signals (845a, 845b) to generate virtualized common control signals (866) and combining the virtualized common control signals (866) with the precoded output signals (895); and

transmitting the N transmit streams using beams formed by the frequency selective precoding matrices (Pf) and the wide-band precoding matrix (Q).

2. The method of claim 1, wherein the generating of the M OFDM time-domain signals (845) comprises transforming signals where the precoding output streams (835) and common control signals are combined, into the M OFDM time-domain signals (845).

3. The method of claim 2, further comprising:

generating virtualized common control signals (866) by applying a common control signal specific antenna virtualization precoding to the common control signals; and
combining the virtualized common control signals (866) with the precoding output streams (835).

4. The method of claim 1, further comprising:

receiving an uplink feedback information including at least one of precoding matrix indicator, PMI, and channel-state-information, CSI; and
determining the frequency selective precoding matrices ($P_f$) and the wide-band precoding matrix (Q) for the time-domain (890, 990, 1090) based on the uplink feedback information.

5. The method of claim 1, wherein the wide-band precoding matrix (Q) for the time-domain (890, 990, 1090) comprises at least one of:

rows that are discrete Fourier transform, DFT, vectors, and
columns that are DFT vectors; and

wherein the beams comprises at least one of:

a broadcast beam comprising a wide beamwidth cell-specific reference signal, CRS, wide beam width channel-state-information reference signals, CSI-RS, and wide beamwidth common control channels associated with the CRS including at least one of physical downlink control channel, PDCCH, and physical broadcast channel; and
a user specific beam comprising narrow beamwidth CSI-RS, narrow beamwidth user equipment specific reference signal, UE-RS, and narrow beamwidth UE data channels associated with UE-RS.

6. A transmitter arranged to implement a method of one of claims 1 to 5 .


**Patentansprüche**

1. Ein Verfahren zum Betreiben eines Senders, der eine Mehrfachnutzer-Mehrfacheingabe-Mehrfachausgabe, MU-MIMO, unterstützt, in einem drahtlosen Kommunikationsnetzwerk, wobei das Verfahren aufweist:

Erzeugen von Vorcodierungs-Ausgangsströmen (835) durch Anwenden frequenzselektiver Vorcodierungsmatrizes ($P_f$) auf Datenströme (820, 920, 1020);
Erzeugen von M orthogonalen Frequenzmultiplex-, OFDM,-Zeitbereichssignalen (845) durch Anwenden einer invertierten schnellen FourierTransformation, IFFT, auf die Vorcodierungs-Ausgangsströme (835);
Erzeugen von N Sendeströmen durch

Erzeugen vorcodierter Ausgangssignale (895) durch Anwenden einer Breitband-Vorcodierungsmatrix (Q) für einen Zeitbereich (890, 990, 1090) auf die M OFDM-Zeitbereichssignale (845), wobei die Breitband-Vorcodierungsmatrix (Q) derart bestimmt wird, dass eine Gesamtvorcodierung für die N Sendeströme einer Multiplikation der frequenzselektiven Vorcodierungsmatrizes ($P_f$) für ein jeweiliges Teilband (f) mit der Breitband-Vorcodierungsmatrix (Q) entspricht, wobei die Zahl N größer als die Zahl M ist,
Erzeugen der N Sendeströme unter Verwendung der vorcodierten Ausgangssignale (895), und
entweder Anwenden einer für CSI-RS spezifischen Antennenvirtualisierungs-Vorcodierung auf Zeitbereichs-CSI-RS, um virtualisierte CSI-RS zu erzeugen, und Kombinieren der virtualisierten CSI-RS mit den vorcodierten Ausgangssignalen (895) oder Anwenden einer für gemeinsame Steuersignale spezifischen Antennenvirtualisierungs-Vorcodierung auf gemeinsame Steuersignale (845a, 845b) im Zeitbereich, um virtualisierte gemeinsame Steuersignale (866) zu erzeugen, und Kombinieren der virtualisierten gemeinsamen Steuersignale (866) mit den vorcodierten Ausgangssignalen (895); und

Senden der N Sendeströme unter Verwendung von Strahlen, die durch die frequenzselektiven Vorcodierungsmatrizes ($P_f$) und die Breitband-Vorcodierungsmatrix (Q) gebildet werden.

2. Das Verfahren nach Anspruch 1, wobei das Erzeugen der M OFDM-Zeitbereichssignale (845) das Transformieren von Signalen, bei denen die Vorcodierungs-Ausgangsströme (835) und gemeinsamen Steuersignale kombiniert werden, in die M OFDM-Zeitbereichssignale (845) aufweist.

3. Das Verfahren nach Anspruch 2, ferner aufweisend:

Erzeugen virtualisierter gemeinsamer Steuersignale (866) durch Anwenden einer für gemeinsame Steuersignale spezifischen Antennenvirtualisierungs-Vorcodierung auf die gemeinsamen Steuersignale; und
Kombinieren der virtualisierten gemeinsamen Steuersignale (866) mit den Vorcodierungs-Ausgangsströmen (835).

4. Das Verfahren nach Anspruch 1, ferner aufweisend:

Empfangen einer Uplink-Rückkopplungsinformation, die zumindest eines eines Vorcodierungs-Matrixindikators, PMI, und einer Kanalzustandsinformation, CSI, aufweist; und
Bestimmen der frequenzselektiven Vorcodierungsmatrizes ($P_f$) und der Breitband-Vorcodierungsmatrix (Q) für den Zeitbereich (890, 990, 1090) basierend auf der Uplink-Rückkopplungsinformation.

5. Das Verfahren nach Anspruch 1, wobei die Breitband-Vorcodierungsmatrix (Q) für den Zeitbereich (890, 990, 1090) zumindest eines von Folgendem aufweist:

Zeilen, die diskrete Fourier-Transformations-, DFT,-Vektoren sind, und
Spalten, die DFT-Vektoren sind; und

wobei die Strahlen zumindest eines von Folgendem aufweisen:

einen Sendestrahl, der ein zellenspezifisches Referenzsignal, CRS, mit großer Strahlbreite, Kanalzustands-informations-Referenzsignale, CSI-RS, mit großer Strahlbreite und gemeinsame Steuerkanäle mit großer Strahlbreite, die dem CRS zugeordnet sind und zumindest einen eines physikalischen Downlink-Steuerkanals, PDCCH, und eines physikalischen Rundfunkkanals aufweisen, aufweist; und
einen nutzerspezifischen Strahl, der ein CSI-RS mit kleiner Strahlbreite, ein nutzergerätspezifisches Referenzsignal, UE-RS, mit kleiner Strahlbreite und UE-Datenkanäle mit kleiner Strahlbreite, die dem UE-RS zugeordnet sind, aufweist.

6. Ein Sender, der eingerichtet ist, um ein Verfahren nach einem der Ansprüche 1 bis 5 zu implementieren.

**Revendications**

1. Un procédé d'exploitation d'un émetteur prenant en charge une entrée multiple sortie multiple multiutilisateur, MU-MIMO, dans un réseau de communication sans fil, le procédé comprenant :

   générer des flux de sortie de précodage (835) en appliquant des matrices de précodage sélectives en fréquence ($P_f$) à des flux de données (820, 920, 1020) ;
   générer M signaux de multiplexage par répartition en fréquence orthogonale, OFDM, de domaine temporel (845) en appliquant une transformation de Fourier rapide inverse, IFFT, aux flux de sortie de précodage (835) ;
   générer N flux d'émission par

   la génération de signaux de sortie précodés (895) en appliquant une matrice de précodage à large bande (Q) pour un domaine temporel (890, 990, 1090) aux M signaux OFDM de domaine temporel (845), la matrice de précodage à large bande (Q) étant déterminée de telle manière qu'un précodage total pour les N flux d'émission correspond à une multiplication des matrices de précodage sélectives en fréquence ($P_f$) pour une sous-bande (f) respective par la matrice de précodage à large bande (Q), le nombre N étant supérieur au nombre M,
   la génération des N flux d'émission en utilisant les signaux de sortie précodés (895), et
   soit l'application d'un précodage de virtualisation d'antenne spécifique aux CSI-RS à des CSI-RS de domaine temporel pour générer des CSI-RS virtualisés et la combinaison des CSI-RS virtualisés avec les signaux de sortie précodés (895), soit l'application d'un précodage de virtualisation d'antenne spécifique aux signaux de commande communs à des signaux de commande communs de domaine temporel (845a, 845b) pour générer des signaux de commande communs virtualisés (866) et la combinaison des signaux de commande communs virtualisés (866) avec les signaux de sortie précodés (895) ; et

   émettre les N flux d'émission en utilisant des faisceaux formés par les matrices de précodage sélectives en fréquence ($P_f$) et la matrice de précodage à large bande (Q).

2. Le procédé selon la revendication 1, dans lequel la génération des M signaux OFDM de domaine temporel (845) comprend la transformation de signaux dans lesquels les flux de sortie de précodage (835) et les signaux de commande communs sont combinés en les M signaux OFDM de domaine temporel (845).

3. Le procédé selon la revendication 2, comprenant en outre :

   générer des signaux de commande communs virtualisés (866) en appliquant un précodage de virtualisation d'antenne spécifique aux signaux de commande communs aux signaux de commande communs ; et
   combiner les signaux de commande communs virtualisés (866) avec les flux de sortie de précodage (835).

4. Le procédé selon la revendication 1, comprenant en outre :

   recevoir une information en retour de liaison montante comprenant un indicateur de matrice de précodage, PMI, et/ou une information d'état de canal, CSI ; et
   déterminer les matrices de précodage sélectives en fréquence ($P_f$) et la matrice de précodage à large bande (Q) pour le domaine temporel (890, 990, 1090) sur la base de l'information en retour de liaison montante.

5. Le procédé selon la revendication 1, dans lequel la matrice de précodage à large bande (Q) pour le domaine temporel (890, 990, 1090) comprend au moins l'un des éléments suivants :

   des rangées qui sont des vecteurs de transformation de Fourier discrète, DFT, et
   des colonnes qui sont des vecteurs de DFT ; et

   les faisceaux comprennent au moins l'un des éléments suivants :

   un faisceau de diffusion comprenant un signal de référence spécifique à la cellule, CRS, à grande largeur de faisceau, des signaux de référence d'information d'état de canal, CSI-RS, à grande largeur de faisceau, et des canaux de commande communs à grande largeur de faisceau associés au CRS et comprenant un canal de commande de liaison descendante physique, PDCCH, et/ou un canal de diffusion physique ; et
   un faisceau spécifique à des utilisateurs comprenant un CSI-RS à largeur de faisceau étroite, un signal de référence spécifique à l'équipement utilisateur, UE-RS, à largeur de faisceau étroite, et des canaux de données d'UE à largeur de faisceau étroite associés à l'UE-RS.

6. Un émetteur agencé pour mettre en oeuvre un procédé selon l'une des revendications 1 à 5.

EP 3 100 367 B1

[Fig. 1]

25

[Fig. 2a]

[Fig. 2b]

[Fig. 3]

[Fig. 4]

[Fig. 5]

[Fig. 6]

[Fig. 7]

[Fig. 8a]

[Fig. 8b]

[Fig. 9]

[Fig. 10]

[Fig. 11]

[Fig. 12]

EP 3 100 367 B1

$$\text{UE-RS} \begin{bmatrix} X_1 \\ X_2 \\ \vdots \\ X_M \end{bmatrix} = \sum_{i=1}^{K} P_i S_i$$

$$\text{CRS} \begin{bmatrix} X_1 \\ X_2 \\ \vdots \\ X_M \end{bmatrix} = \sum_{i=0}^{1} P_{crs,i} S_i$$

$$X_i'[F_{iFFT} x_i, cp] \rightarrow$$

$$y = \sum_{i=1}^{M} q_i x_i'$$

$$y = Qx'$$

$$Qp_{crs,i} = \sum_{j=1}^{M} p_{ji} q_i$$

[Fig. 13]

```
                    ┌─────────────┐
                    │    START    │
                    └──────┬──────┘
                           │
                           ▼
        ┌──────────────────────────────────┐
        │         BEAMFORM IN              │ ~1301
        │      FREQUENCY-DOMAIN            │
        └──────────────────┬───────────────┘
                           │
                           ▼
        ┌──────────────────────────────────┐
        │    BEAMFORM IN TIME-DOMAIN       │ ~1303
        └──────────────────┬───────────────┘
                           │
                           ▼
        ┌──────────────────────────────────┐
        │     TRANSMIT SIGNALS THAT        │
        │  TOGETHER FORM BROADCAST         │ ~1305
        │  BEAMS AND USER-SPECIFIC         │
        │           BEAMS                  │
        └──────────────────┬───────────────┘
                           │
                           ▼
                    ┌─────────────┐
                    │     END     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130301454 A1
- US 20120008587 A1
- WO 2013089525 A1
- US 20130022143 A1
- US 20090290657 A1

### Non-patent literature cited in the description

- **L. VUOKKO ; V.-M. KOLMONEN ; J. KIVINEN ; P. VAINIKAINEN.** Results from 5.3 GHz MIMO measurement campaign. *presented at COST 273 TD(04)193, Duisburg,* 2004
- Full Dimension MIMO (FD-MIMO) for Next Generation Cellular Technology. **YOUNG-HAN NAM ; BOON LOONG NG ; KRISHNA SAYANA ; YANG LI ; JIANZHONG (CHARLIE) ZHANG ; YOUNSUN KIM ; JUHO LEE.** Communications Magazine. IEEE, June 2013, vol. 51, 172, , 179
- **T. L. MARZETTA.** Non-cooperative cellular wireless with unlimited numbers of base station antennas. *IEEE Trans. Wireless Communications,* November 2010, vol. 9 (11), 3590-3600
- Evolved Universal Terrestrial Radio Access (E-UTRA); Physical channels and modulation. *3GPP TS 36.211*